# EUROPEAN PATENT APPLICATION

(11) **EP 2 197 187 A1**
(43) Date of publication of application: **16.06.2010**
(21) Application number: 07829195.2
(22) Date of filing: 04.10.2007
(51) Int. Cl.: H04M 3/22, H04M 3/00

(54) **INTERCEPT SYSTEM, PATH CHANGING DEVICE, AND COMPUTER PROGRAM**

(71) Applicant: Fujitsu Limited, Kawasaki-shi, Kanagawa 211-8588 (JP)
(72) Inventor: FUJIMOTO, Shingo, Kawasaki-shi, Kanagawa 2118588 (JP); MURAKAMI, Masahiko, Kawasaki-shi, Kanagawa 2118588 (JP); MATSUKURA, Ryuichi, Kawasaki-shi, Kanagawa 2118588 (JP); OKUYAMA, Saitoshi, Kawasaki-shi, Kanagawa 2118588 (JP)
(74) Representative: Stebbing, Timothy Charles
(86) International application number: PCT/JP2007/069457
(87) International publication number: WO 2009/044472

(57) **Abstract**

An intercept system, a route changing device and a computer program of the present invention are provided with a call controller such as an SIP server computer for controlling the call between a plurality of communication devices connected through a packet network, a route setting device such as a router for setting a route along which communication on the call between the communication devices is relayed, and a duplicating device for duplicating a packet to be intercepted, acquire communication device identification information for identifying positions on the packet network of the communication devices from the call controller, set the route setting device in such a way that a packet received from one communication device is transmitted to the duplicating device as to the communication on the call between the communication devices identified by the acquired communication device identification information, and return the received packet to the route setting device after the duplication of the received packet by the duplicating device for interception.

## Description

### TECHNICAL FIELD

The present invention relates to: an intercept system for intercepting communication on a call, comprising a call controller for controlling the call between a plurality of communication devices connected through a packet network and a route setting device for setting a route along which communication on the call between the communication devices is relayed; a route changing device to be used in the intercept system; and a computer program for realizing the route changing device.

### BACKGROUND ART

Introduction of new communication systems such as the NGN (next generation network) or the fourth-generation mobile phone is replacing a conventional telephone service with an IP telephone service. An IP telephone service using a packet exchange network does not include a line switching device, which is included in a telephone service using a line switching network. Accordingly, it has become difficult to intercept communication from a line switching device, for the purpose of a criminal investigation, for example.

An example of methods for intercepting communication in an IP telephone service is a method of duplicating a speech communication packet at the telephone set side and transferring the duplicated packet to a device for interception. Another example is a method of duplicating all the communication including the speech communication to be intercepted at a route setting device such as a router through which a speech communication packet passes and transferring the duplicated packet to a device for interception.

Furthermore, a method for intercepting communication in an IP telephone service is also disclosed in Patent Document 1.
[Patent Document 1] Japanese Patent Application Laid-Open No. 2006-319619

### DISCLOSURE OF INVENTION

### PROBLEMS TO BE RESOLVED BY THE INVENTION

However, the method of duplicating and transferring a speech communication packet at the telephone set side has a problem that the fact of interception can be easily found out by the user who is using the telephone set. Moreover, the method of duplicating and transferring all the communication to be intercepted has a problem that processing load and communication load of the route setting device become large. It is to be noted that the same problem remains even when communication to be transferred is narrowed down to a unit such as a subnet unit or a port unit including the telephone set to be intercepted. Furthermore, establishment of a variety of intercept methods other than Patent Document 1 is demanded in order to make it possible to use a variety of intercept methods depending on the situation.

The present invention has been made in view of such a situation. That is, identification information of a telephone set to be intercepted is acquired by communication with a call controller, and the route is changed in such a way that only a speech communication packet identified by the acquired identification information is transferred from a route setting device to another device, duplicated at the another device, and then returned to the route setting device. The main object is to provide: a new intercept system, which is hardly found out by the user and does not cause increase in processing load and communication load of a specific device; a route changing device to be used in the intercept system; and a computer program for realizing the route changing device.

Another object of the present invention is to provide an intercept system and the like, wherein the route setting is changed in such a way that a device for duplication lies as a device for relaying communication between a plurality of route setting devices, so that it becomes possible to prevent excessive increase in the route length and occurrence of delay.

### SOLUTION TO PROBLEM

An intercept system according to the first aspect of the invention is an intercept system for intercepting communication on a call, including a call controller for controlling a call between a plurality of communication devices connected through a packet network; and a route setting device for setting a route along which communication on a call between the communication devices is relayed, characterized by comprising: a duplicating device for duplicating a packet to be intercepted; means for acquiring communication device identification information for identifying positions on the packet network of the communication devices from the call controller; means for setting the route setting device in such a way that a packet received from one communication device is transmitted to the duplicating device as to communication on a call between the communication devices identified by acquired communication device identification information; and means for returning a received packet to the route setting device after duplication of the received packet by the duplicating device for use in interception.

An intercept system according to the second aspect of the invention is an intercept system for intercepting communication on a call, including a call controller for controlling a call between a plurality of communication devices connected through a packet network and a route setting device for setting a route along which communication on a call between the communication devices is relayed, characterized by comprising: an intercept device for intercepting communication; a route changing device for changing a route in such a way that communication is intercepted by the intercept device; and a duplicating device for duplicating a packet to be intercepted, wherein the route changing device comprises: acquisition means for acquiring communication device identification information for identifying positions on the packet network of the communication devices from the call controller; and means for setting the route setting device in such a way that a packet received from one communication device is transmitted to the duplicating device and a packet received from the duplicating device is transmitted to another communication device as to communication on a call between the communication devices identified by acquired communication device identification information, and the duplicating device comprises: means for duplicating a packet received from the route setting device; means for returning a received packet to the route setting device; and means for transmitting a duplicated packet to the intercept device.

An intercept system according to the third aspect of the invention is an intercept system for intercepting communication on a call, including a call controller for controlling a call between a plurality of communication devices connected through a packet network and a plurality of route setting devices for setting a route along which communication on a call between the communication devices is relayed, characterized by comprising: an intercept device for intercepting communication; a route changing device for changing a route in such a way that communication is intercepted by the intercept device; and a duplicating device for duplicating a packet to be intercepted, wherein the route changing device comprises: means for acquiring communication device identification information for identifying positions on the packet network of the communication devices from the call controller; means for setting a first route setting device in such a way that a packet received from a first communication device is transmitted to the duplicating device as to communication on a call between the communication devices identified by acquired communication device identification information; and means for setting a second route setting device in such a way that a packet received from the duplicating device is transmitted to a second communication device as to communication on a call between the communication devices identified by acquired communication device identification information, and the duplicating device comprises: means for duplicating a packet received from the first route setting device; means for transmitting a received packet to the second route setting device; and means for transmitting a duplicated packet to the intercept device.

An intercept system according to the fourth aspect of the invention is the intercept system of the second aspect of the invention or the third aspect of the invention, **characterized in that** the intercept device comprises means for transmitting specification information for specifying the communication device to the route changing device, and the acquisition means provided in the route changing device is constructed to acquire communication device identification information of a communication device specified in the specification information.

An intercept system according to the fifth aspect of the invention is the intercept system of any one of the second aspect of the invention to the fourth aspect of the invention, **characterized in that** the route changing device further comprises specification means for specifying the route setting device, which changes route setting, from a plurality of devices on the packet network.

An intercept system according to the sixth aspect of the invention is the intercept system of the fifth aspect of the invention, **characterized in that** the specification means is constructed to specify the route setting device by identifying route setting device identification information for identifying positions of the route setting devices, which is relaying a communication packet to be intercepted, on the packet network based on the acquired communication device identification information.

An intercept system according to the seventh aspect of the invention is the intercept system of the fifth aspect of the invention, **characterized in that** the identifying means is constructed to identify the route setting device on the packet network which is relaying communication, by inquiring whether communication related to the acquired communication device identification information is being relayed or not on each devices.

An intercept system according to the eighth aspect of the invention is an intercept system for intercepting communication on a call, including a call controller for controlling a call between a plurality of communication devices connected through a packet network and a route setting device for setting a route along which communication on a call between the communication devices is relayed, characterized by comprising: an intercept device for intercepting communication; a route changing device for changing a route in such a way that communication is intercepted by the intercept device; and a duplicating device for duplicating a packet to be intercepted, wherein the call controller comprises means for transmitting notification information for giving a notice of detection to the route changing device when a call of a preset communication device is detected, the route changing device comprises means for setting the route setting device in such a way that a packet received from one communication device is transmitted to the duplicating device and a packet received from the duplicating device is transmitted to another communication device as to communication on a call between the communication devices, based on received notification information, and the duplicating device comprises: means for duplicating a packet received from the route setting device; means for returning a received packet to the route setting device; and means for transmitting a duplicated packet to the intercept device.

An intercept system according to the ninth aspect of the invention is the intercept system of any one of the aspect of the second invention to the aspect of the eighth invention, **characterized in that** the call controller further comprises: means for recording an encryption key to be used for communication exchanged between the communication devices; and means for transmitting a recorded encryption key to the intercept device.

A route changing device according to the tenth aspect of the invention is a route changing device, capable of communicating with a call controller for controlling a call between a plurality of communication devices connected through a packet network and with a route setting device for setting a route along which communication on a call between the communication devices is relayed, for changing a route set by the route setting device, the route changing device characterized by comprising: means for communicating with a packet duplicating device for duplicating a packet; means for acquiring communication device identification information for identifying a position on the packet network of the communication device from the call controller; means for setting the route setting device in such a way that a packet received from one communication device is transmitted to the duplicating device and a packet received from the duplicating device is transmitted to another communication device as to communication on a call between the communication devices identified by acquired communication device identification information; and means for making the duplicating device to duplicate and return a packet received from the route setting device.

A computer program according to the eleventh aspect of the invention is a computer program for making a computer, capable of communicating with a call controller for controlling a call between a plurality of communication devices connected through a packet network and with a route setting device for setting a route along which communication on a call between the communication devices is relayed, change a route set by the route setting device, the computer program characterized by comprising: a process procedure of acquiring communication device identification information for identifying positions on the packet network of the communication devices from the call controller; a process procedure of transmitting a command for setting the route setting device in such a way that a packet received from one communication device is transmitted to the duplicating device and a packet received from the duplicating device is transmitted to another communication device as to communication on a call between the communication devices identified by acquired communication device identification information; and a process procedure of transmitting a command for making a duplicating device for duplicating a packet to duplicate and return a packet received from the route setting device.

In the first aspect of the invention, the second aspect of the invention, the tenth aspect of the invention and the eleventh aspect of the invention, it is unlikely that the interception is recognized by the user who is using the communication device since it is unnecessary to make the communication device to perform a process related to interception. Moreover, it is possible to prevent unnecessary increase in processing load and communication load of a route setting device since only a packet to be used for interception is transferred and duplicated.

In the third aspect of the invention, it is unlikely that the interception is recognized by the user who is using the communication device since it is unnecessary to make the communication device to perform a process related to interception. Moreover, it is possible to prevent unnecessary increase in processing load and communication load of a duplicating device since only a packet to be used for interception is transferred and duplicated. Furthermore, it is possible to prevent occurrence of excessive transmission delay since excessive increase in the route length is prevented by changing the route setting in such a way that a duplicating device lies as a device for relaying communication between a plurality of route setting devices.

In the fourth aspect of the invention, interception is started when specification is accepted from the intercept device.

In the fifth aspect of the invention to the seventh invention, it is possible to specify a route setting device to be an edge router.

In the eighth aspect of the invention, interception is started when communication on a preset call is started. It is unlikely that the interception is recognized by the user who is using the communication device since it is unnecessary to make the communication device to perform a process related to interception. Moreover, it is possible to prevent unnecessary increase in processing load and communication load of the route setting device since only a packet to be used for interception is transferred and duplicated.

In the ninth aspect of the invention, it is possible to intercept encrypted communication.

### EFFECT OF THE INVENTION

An intercept system, a route changing device and a computer program according to the present invention intercept communication on the call in a communication system provided with: a call controller such as an SIP server computer for controlling the call between a plurality of communication devices such as IP telephone sets connected through a packet network; and a route setting device such as a router for setting a route along which communication on the call between the communication devices is relayed. Moreover, for example, an intercept device for intercepting communication, a route changing device for changing a route in such a way that communication is intercepted by the intercept device, and a duplicating device for duplicating a packet to be intercepted are used. Communication device identification information such as an IP address for identifying a position on the packet network of a communication device is acquired from a call controller, and the route setting device is set in such a way that a packet received from one communication device is transmitted to the duplicating device and a packet received from the duplicating device is transmitted to another communication device as to the communication on the call between communication devices identified by the acquired communication device identification information. The duplicating device duplicates a packet received from the route setting device, returns the received packet to the route setting device, and transmits the duplicated packet to the intercept device.

The present invention having such a structure shows a beneficial effect that it is unlikely that the interception is found out by the user since the communication device used by the user does not perform a process related to interception. Moreover, the present invention shows a beneficial effect such that it is possible to prevent unnecessary increase in processing load and communication load of a route setting device since only a packet to be used for interception is transferred and duplicated on the basis of the communication device identification information and it is unnecessary to transfer and duplicate an unnecessary packet.

Moreover, in the present invention, the first route setting device is set in such a way that a packet received from the first communication device is transmitted to the duplicating device as to the communication on the call between communication devices identified by the acquired communication device identification information and moreover the second route setting device is set in such a way that a packet received from the duplicating device is transmitted to the second communication device as to the communication on the call between communication devices identified by the acquired communication device identification information.

The present invention having such a structure shows a beneficial effect such that it is possible to prevent occurrence of excessive delay since the route setting is changed in such a way that the duplicating device lies as a device for relaying communication between a plurality of route setting devices so as to prevent excessive increase in the route length.

Moreover, the present invention shows a beneficial effect such that it is possible to start the interception by a trigger based on variety of conditions such as specification from the intercept device or detection of preset communication.

Furthermore, the present invention shows a beneficial effect such that it encrypted communication can be intercepted by transmitting an encryption key, which is recorded in the call controller and is to be used for communication exchanged between communication devices, in response to a request from the intercept device.

### BRIEF DESCRIPTION OF THE DRAWINGS

FIG. 1 is a conceptual diagram illustrating a configuration example of an intercept system according to Embodiment 1 of the present invention.
FIG. 2 is a block diagram illustrating a configuration example of hardware of the respective devices provided in the intercept system according to Embodiment 1 of the present invention.
FIG. 3 is a block diagram illustrating a configuration example of hardware of the respective devices provided in the intercept system according to Embodiment 1 of the present invention.
FIG. 4 is a functional block diagram illustrating an example of functions of the respective devices provided in the intercept system according to Embodiment 1 of the present invention.
FIG. 5 is a sequence diagram illustrating an example of a call connection establishment process of the intercept system according to Embodiment 1 of the present invention.
FIG. 6 is a sequence diagram illustrating an example of a route change process of the intercept system according to Embodiment 1 of the present invention.
FIGs. 7A-7B are explanatory diagrams conceptually illustrating an example of the record content of a route table of a route setting device provided in the intercept system according to Embodiment 1 of the present invention.
FIG. 8 is an explanatory diagram conceptually illustrating an example of a part of the content described in a route changing command transmitted from a route changing device in the intercept system according to Embodiment 1 of the present invention.
FIG. 9 is a sequence diagram illustrating an example of communication processing after route changing of the intercept system according to Embodiment 1 of the present invention.
FIG. 10 is a conceptual diagram illustrating a configuration example of an intercept system according to Embodiment 2 of the present invention.
FIG. 11 is a functional block diagram illustrating an example of functions of the respective devices provided in the intercept system according to Embodiment 2 of the present invention.
FIG. 12 is a sequence diagram illustrating an example of a route change process of the intercept system according to Embodiment 2 of the present invention.
FIG. 13 is a sequence diagram illustrating an example of communication processing after route changing of the intercept system according to Embodiment 2 of the present invention.
FIG. 14 is a functional block diagram illustrating en example of functions of the respective devices provided in an intercept system according to Embodiment 3 of the present invention.
FIG. 15 is an explanatory diagram conceptually illustrating an example of the record content of a specification information database provided in a call controller according to Embodiment 3 of the present invention.
FIG. 16 is a sequence diagram illustrating an example of an intercept reservation process of the intercept system according to Embodiment 3 of the present invention.
FIG. 17 is a sequence diagram illustrating an example of an intercept start process of the intercept system according to Embodiment 3 of the present invention.
FIG. 18 is a functional block diagram illustrating an example of functions of the respective devices provided in an intercept system according to Embodiment 4 of the present invention.
FIG. 19 is a sequence diagram illustrating an example of an intercept start process of the intercept system according to Embodiment 4 of the present invention.
FIG. 20 is a functional block diagram illustrating an example of functions of the respective devices provided in an intercept system according to Embodiment 5 of the present invention.
FIG. 21 is a sequence diagram illustrating an example of an intercept start process of the intercept system according to Embodiment 5 of the present invention.

### DESCRIPTION OF REFERENCE SYMBOLS

- 1: Route Changing Device
- 10: Control Unit
- 10a: Intercept Request Accepting Means
- 10b: Call Control Information Acquiring Means
- 10c: Route Setting Device Specifying Means
- 10d: Route Changing Means
- 10e: Intercept Reservation Means
- 10f: Encryption Key Acquiring Means
- 10g: Encryption Key Transmitting Means
- 12: Recording Unit
- 12a: Route Setting Device Database
- 12b: Encryption Key Database
- 2: Communication Device
- 20: Control Unit
- 21: Recording Unit
- 3: Call Controller
- 30: Control Unit
- 30a: Call Control Means
- 30b: Call Control Information Extracting Means
- 30c: Call Control Information Providing Means
- 30d: Intercept Starting Means
- 30e: Intercept Route Setting Means
- 30f: Encryption Key Reading Means
- 31: Recording Unit
- 31a: Call Control Information Database
- 31b: Specification Information Database
- 31c: Encryption Key Database

- 4: Route Setting Device
- 40: Control Unit
- 40a: Route Setting Means
- 40b: Packet Transferring Means
- 40c: Route Changing Means
- 40d: Rewriting Means
- 41: Recording Unit
- 41a: Route Table
- 5: Duplicating Device
- 50: Control Unit
- 50a: Duplicating Means
- 50b: Rewriting Means
- 51: Recording Unit
- 6: Intercept Device
- 60: Control Unit
- 60a: Intercept Requesting Means
- 60b: Encryption Key Receiving Means
- 61: Recording Unit
- 100: Packet Network
- 200: Computer Program

### BEST MODE FOR CARRYING OUT THE INVENTION

The following description will explain the present invention with reference to the drawings for illustrating some embodiments thereof.

### Embodiment 1

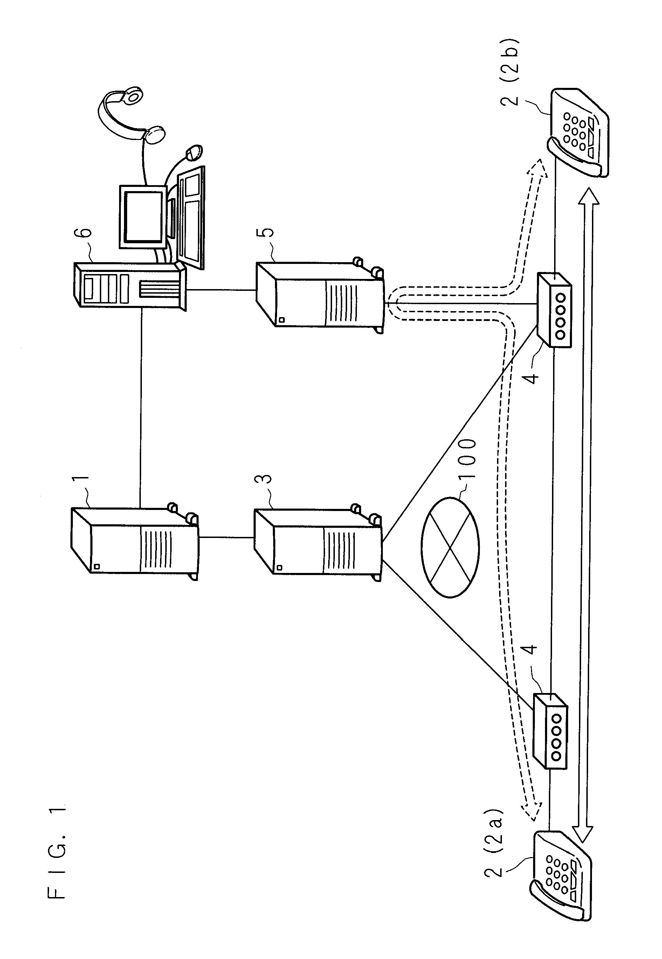

FIG. 1 is a conceptual diagram illustrating a configuration example of an intercept system according to Embodiment 1 of the present invention. Denoted by reference numeral 1 in FIG. 1 is a route changing device, which uses a computer for communication to perform a process such as changing of the setting of a communication route as control of interception related to the intercept system of the present invention, and the route changing device 1 is connected with a packet network 100 such as the Internet or the VoIP network. The packet network 100 is connected with a plurality of communication devices 2, 2 to be used as IP telephone sets and call connection is established under the control of a call controller 3 using an SIP (Session Initiation Protocol) server computer, so that communication on the call, i.e., IP telephone communication is performed. The communication between the communication devices 2, 2 is performed using a communication route on the packet network 100, which is set by a plurality of route setting devices 4, 4, ... such as a router. It is to be noted that a route setting device 4, which is at a position on the packet network 100 closest to a communication device 2 among the route setting devices 4, 4, ..., is referred to as an edge router. Furthermore, the packet network 100 is connected with a duplicating device 5 for duplicating a speech communication packet for the purpose of communication interception and with an intercept device 6 to be used as a monitoring device for intercepting and outputting the communication.

The two-headed arrow drawn in full lines in FIG. 1 is a communication route between the communication devices 2, 2, which is set by the route setting devices 4, 4, ... under the control of the call controller 3, and a speech communication packet for an IP telephone service is transferred along the communication route set by the route setting devices 4, 4, .... The two-headed arrow drawn in dotted lines is a communication route changed under the control of the route changing device 1. Along the changed communication route, a speech communication packet to be transmitted between the communication devices 2, 2 is transferred from a route setting device 4, which is to be an edge router, to the duplicating device 5, duplicated by the duplicating device 5, and then returned to the route setting device 4. It is to be noted that a speech communication packet duplicated by the duplicating device 5 is transmitted to the intercept device 6, so that communication can be intercepted by the intercept device 6.

The following description will explain an embodiment for intercepting speech communication without being recognized by the users who operate speech communication devices 2, 2, ... for the purpose of a criminal investigation, for example, though the present invention is not limited to this but can be applied to interception in a state where it is unnecessary to prevent the interception from being recognized by the users. For example, the present invention can be developed in a variety of embodiments such as an embodiment wherein when a manager such as a supervisor for managing guidance person for performing telephone service, such as various kinds of guidance, provides services such as various kinds of guidance by telephone communication at a call center for providing a response telephone service, the manager intercepts the content of speech communication of the guidance person, or records the content of speech communication in a device operated by the manager.

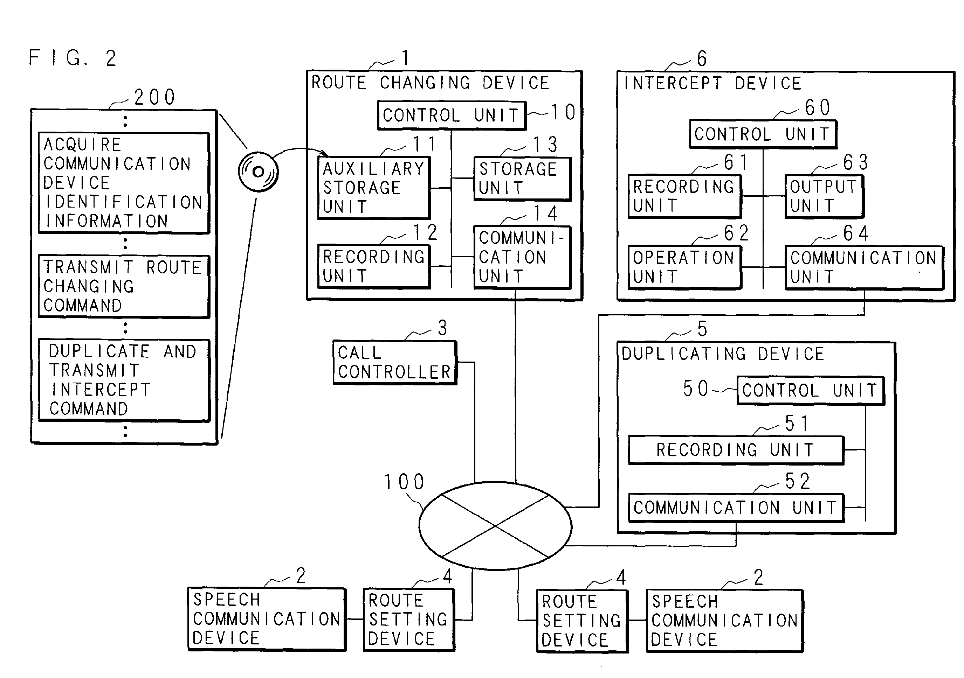

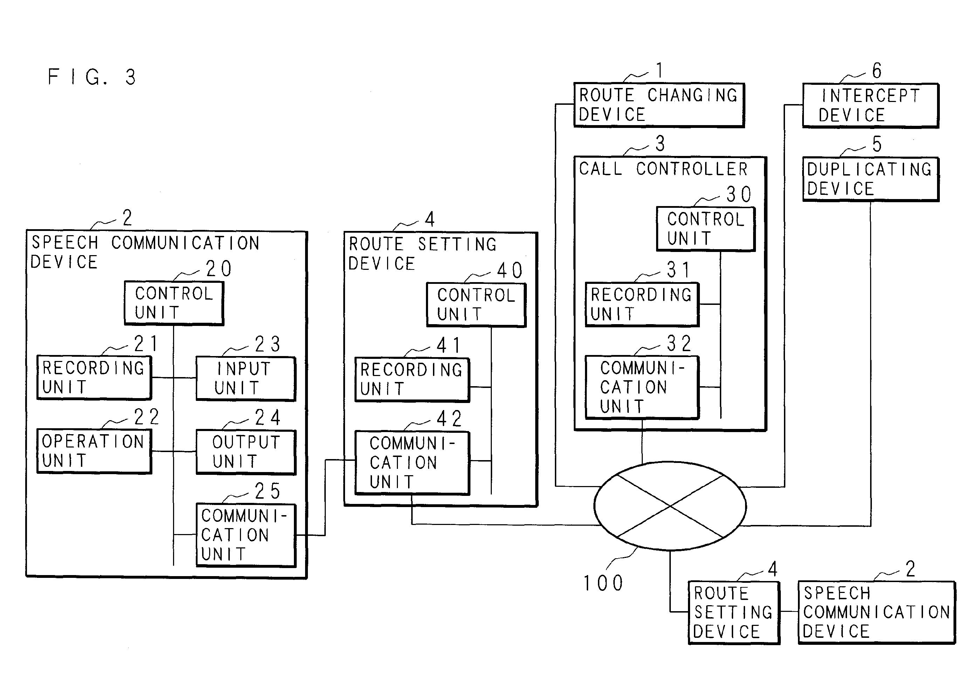

FIGS. 2 and 3 are block diagrams for illustrating a configuration example of hardware of the respective devices provided in the intercept system according to Embodiment 1 of the present invention. FIG. 2 illustrates the route changing device 1, the duplicating device 5 and the intercept device 6 to be used mainly for interception, while FIG. 3 illustrates the communication device 2, the call controller 3 and the route setting device 4 to be normally used mainly for telephone communication.

The route changing device 1 comprises: a control unit 10 such as a CPU for controlling the entire device; an auxiliary storage unit 11 such as a CD-ROM drive for reading various kinds of information from a recording medium such as a CD-ROM for recording various kinds of information such as data and a computer program 200 of the present invention; a recording unit 12 such as a hard disk for recording various kinds of information such as the computer program 200 of the present invention read by the auxiliary storage unit 11; and a storage unit 13 such as a RAM for temporarily storing information. A computer for communication operates as the route changing device 1 of the present invention by storing the computer program 200 of the present invention recorded in the recording unit 12 in the storage unit 13 and executing the computer program 200 under the control of the control unit 10. Furthermore, the route changing device 1 includes a communication unit 14 such as a communication port to be connected with the packet network 100.

The duplicating device 5 includes a control unit 50, a recording unit 51 such as a ROM, a RAM or a hard disk for recording various kinds of information such as data and a computer program and a communication unit 52 to be connected with the packet network 100.

The intercept device 6 includes a control unit 60, a recording unit 61 for recording various kinds of information such as data and a computer program, an operation unit 62 such as a mouse or a keyboard for accepting an operation of the user, an output unit 63 such as a monitor for displaying an image or a speaker for outputting a voice and a communication unit 64.

The communication device 2 includes a control unit 20, a recording unit 21 for recording various kinds of information such as data and a computer program, an operation unit 22 such as various kinds of pushbuttons for accepting an operation of the user, an input unit 23 such as a microphone for accepting input of a voice or a camera for obtaining an image; an output unit 24 such as a monitor or a speaker and a communication unit 25.

The call controller 3 includes a control unit 30, a recording unit 31 for recording various kinds of information such as data and a computer program, and a communication unit 32.

The route setting device 4 includes a control unit 40, a recording unit 41 for recording various kinds of information such as data and a computer program, and a communication unit 42.

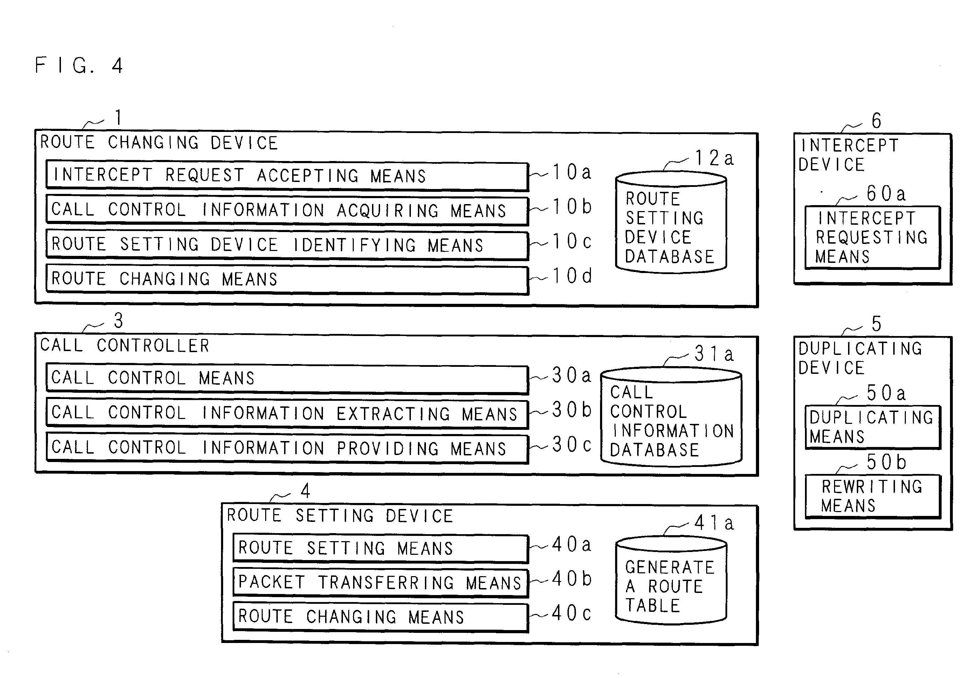

FIG. 4 is a functional block diagram illustrating an example of functions of the respective devices provided in the intercept system according to Embodiment 1 of the present invention. The route changing device 1 of the present invention executes various kinds of computer programs related to communication interception such as the computer program 200 at the control unit 10 so as to cause the control unit 10 to function as various kinds of program modules such as: intercept request accepting means 10a for accepting a request for interception from the intercept device 6; call control information acquiring means 10b for acquiring information related to call control from the call controller 3; route setting device identifying means 10c for identifying a route setting device 4, route setting of which is to be changed; and route changing means 10d for changing a route set by the route setting device 4. Moreover, the route changing device 1 of the present invention executes various kinds of computer programs related to communication interception such as the computer program 200 at the control unit 10 so as to generate various kinds of databases such as a route setting device database (route setting device DB) 12a for recording information related to a route setting device 4, which functions as an edge router, in a recording area of the recording unit 12.

The call controller 3 used in the intercept system of the present invention executes various kinds of computer programs at the control unit 30 so as to make the control unit 30 function as various kinds of program modules such as: call control means 30a for executing control on the call; call control information extracting means 30b for extracting information to be used for call control such as establishment of call connection; and call control information providing means 30c for providing information related to call control on the basis of a command from the route changing device 1. Moreover, the call controller 3 executes various kinds of computer programs at the control unit 30 so as to generate various kinds of databases such as a call control information database (call control information DB) 31a for recording information related to call control in a recording area of the recording unit 31.

The route setting device 4 used in the intercept system of the present invention executes various kinds of computer programs at the control unit 40 so as to make the control unit 40 function as various kinds of program modules such as: route setting means 40a for setting a route on the packet network 100; packet transferring means 40b for transferring a speech communication packet along the set route; and route changing means 40c for changing a route on the basis of a command from the route changing device 1.
Moreover, the route setting device 4 executes various kinds of computer programs at the control unit 40 so as to generate a route table 41a for recording information related to the set route in a recording area of the recording unit 41.

The duplicating device 5 used in the intercept system of the present invention executes various kinds of computer programs at the control unit 50 so as to make the control unit 50 to function as various kinds of program modules such as: duplicating means 50a for duplicating a speech communication packet; and rewriting means 50b for rewriting information such as a destination of transmission of a speech communication packet.

The intercept device 6 used in the intercept system of the present invention executes various kinds of computer programs at the control unit 60 so as to make the control unit 60 function as various kinds of program modules such as intercept requesting means 60a for requesting interception to the route changing device 1.

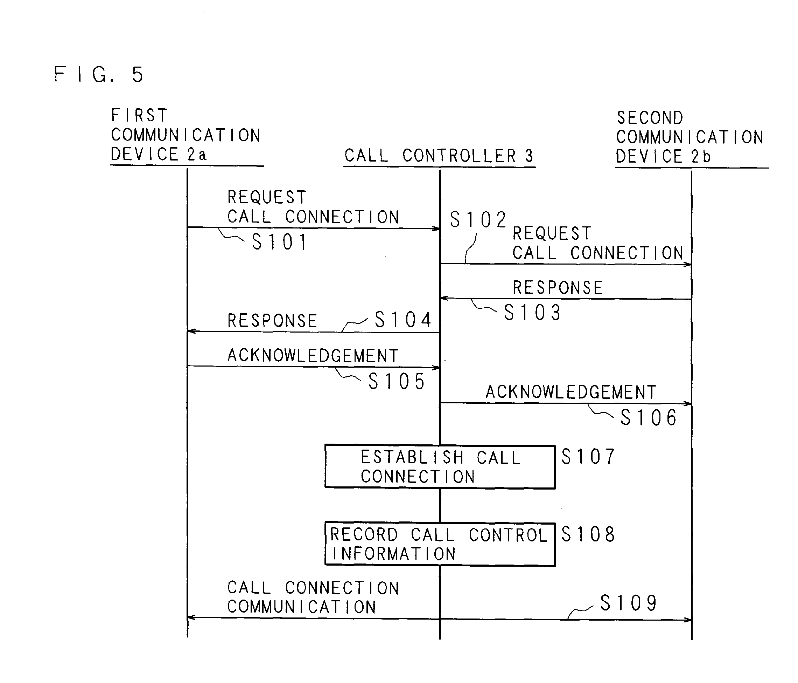

Next, the processing of various kinds of devices provided in the intercept system according to Embodiment 1 of the present invention will be described. FIG. 5 is a sequence diagram illustrating an example of a call connection establishment process of the intercept system according to Embodiment 1 of the present invention. It is to be noted that a communication device 2 at the calling party side is referred to as a first communication device 2a and a communication device 2 at the called party side is referred to as a second communication device 2b in the following description for ease of explanation. The first communication device 2a accepts an operation of the user, such as input of a telephone number, at the operation unit 22 under the control of the control unit 20 and transmits a packet of a call connection request based on a protocol such as an SDP (Session Description Protocol) from the communication unit 25 to the call controller 3 (S101). In the call connection request to be transmitted at the step S101, specification information for specifying the second communication device 2b such as the accepted telephone number is described.

The call controller 3 accepts the call connection request at the communication unit 32 by the processing of the call control means 30a based on the control of the control unit 30, converts the specification information described in the accepted call connection request into communication device identification information such as an IP address and a port number for identifying a position on the packet network 100 of the second communication device 2b, and transmits a packet of a call connection request from the communication unit 32 to the second communication device 2b identified by the communication device identification information obtained by the conversion (S102). The conversion of specification information such as a telephone number into communication device identification information such as an IP address and a port number is executed by a function related to a general IP telephone such as the ENUM or the DNS.

The second communication device 2b receives the call connection request at the communication unit 25 under the control of the control unit 20 and executes a process such as output of a ringing tone. When the user who operates the second communication device 2b performs a response operation, the second communication device 2b transmits a response packet for call connection from the communication unit 25 to the call controller 3 under the control of the control unit 20 (S103).

The call controller 3 receives the response at the communication unit 32 by the processing of the call control means 30a based on the control of the control unit 30 and transmits the received response packet from the communication unit 32 to the first communication device 2a (S104).

The first communication device 2a receives the response at the communication unit 25 under the control of the control unit 20 and transmits a packet of acknowledgement (ACK) for giving a notice of normal reception of a response and acknowledging the call connection, from the communication unit 25 to the call controller 3 (S105).

The call controller 3 receives the acknowledgement at the communication unit 32 under the control of the control unit 30 and transmits the received packet of acknowledgement from the communication unit 32 to the second communication device 2b (S106).

The call controller 3 then establishes call connection between the first communication device 2a and the second communication device 2b by the processing of the call control means 30a based on the control of the control unit 30 (S107) and records information related to call control such as the CODEC, media information and communication device identification information as to the established call connection, in the call control information database 31a (S108).

The first communication device 2a and the second communication device 2b then start communication related to call connection along a route set by the route setting means 40a of the route setting device 4 (S109). The communication related to call connection is telephone communication for causing bidirectional streaming of a speech communication packet such as a voice packet including information for outputting a voice and an image packet including information for outputting an image on the basis of a communication protocol such as the RTP. A call connection establishment process is executed in such a manner. It is to be noted that the route setting device 4 records information related to the set route in the route table 41a.

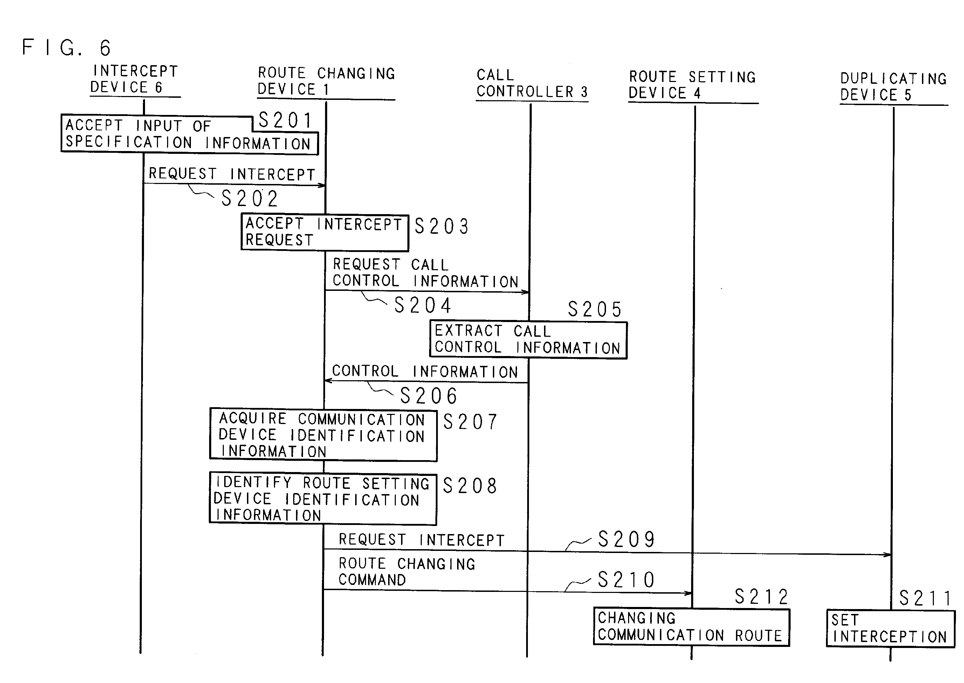

FIG. 6 is a sequence diagram illustrating an example of a route change process of the intercept system according to Embodiment 1 of the present invention. The user of the intercept device 6 inputs specification information such as a telephone number for specifying a communication device 2, communication of which is to be intercepted, into the intercept device 6. The intercept device 6 accepts input of specification information from the operation unit 62 by the processing of the intercept requesting means 60a based on the control of the control unit 60 (S201) and transmits a packet of an intercept request, in which the accepted specification information is described, from the communication unit 64 to the route changing device 1 (S202).

The route changing device 1 accepts the intercept request received by the communication unit 14 by the processing of the intercept request accepting means 10a based on the control of the control unit 10 for executing the computer program 200 of the present invention (S203) and transmits a packet of a call control information request, in which specification information is described, for requesting information related to call control from the communication unit 14 to the call controller 3 so as to acquire communication device identification information such as an IP address and a port number corresponding to the specification information such as a telephone number described in the intercept request, by the processing of the call control information acquiring means 10b (S204).

The call controller 3 extracts call control information such as communication device identification information corresponding to the specification information described in the call control information request received by the communication unit 32 from the call control information database 31a by the processing of the call control information extracting means 30b based on the control of the control unit 30 (S205), and transmits a packet, in which the call control information is described, from the communication unit 32 to the route changing device 1 by the processing of the call control information providing means 30c (S206).

The route changing device 1 acquires the communication device identification information from the call control information received by the communication unit 14 by the processing of the call control information acquiring means 10b based on the control of the control unit 10 (S207) and identifies route setting device identification information for identifying a position such as an IP address and a port number on the packet network 100 of a route setting device 4, which is to be an edge router for relaying the communication between the fist communication device 2a and the second communication device 2b, by the route setting device specifying means 10c on the basis of the communication device identification information (S208).

Hereinafter, methods for identifying the route setting device identification information at the step S208 will be described. The first method for identifying route setting device identification information is a method of determining whether acquired communication device identification information and route setting device identification information are recorded in association with each other in the route setting device database 12a or not and identifying route setting device identification information associated with the acquired communication device identification information when recorded.

The second method for identifying the route setting device identification information is an identification method of estimating route setting device identification information on the basis of acquired communication device identification information. For example, when the IP address of the first communication device 2a is "AAA.BBB.CCC.DDD" and the subnet is "255.255.255.0", it is estimated that the IP address of a route setting device 4, which functions as an edge router for communication of the first communication device 2a, is "AAA.BBB.CCC.1". This is an identification method based on a widespread IP address assignment method wherein an IP address having "1" at the end thereof is assigned to a device to be a gateway, or a route setting device 4, which functions as an edge router, here. Specifically, assume that call control information including the communication device identification information of the first communication device 2a is acquired and the following information is obtained.

c = IN IP4 192.168.10.2
m = audio 4917 RTP/AVP 0

The call control information including the above communication device identification information indicates that the IP address of the first communication device 2a is "192.168.10.2" defined by the IP Version 4 and the port number of UDP communication is "4917". The call control information also indicates that the communication is voice communication using a streaming protocol defined by the RTP. In such a case, the IP address of the route setting device 4 is identified as "192.168.10.1".

The third method for identifying the route setting device identification information is a method of transmitting an exploration packet for inquiring whether communication related to the acquired communication device identification information is being relayed or not to a plurality of routers to be the candidates of a route setting device 4 on the packet network 100 and identifying a device, which returns a response packet indicating that the communication is being relayed, as a route setting device 4. When a plurality of devices return response packets indicating that the communication is being relayed, it is to be noted that it is possible to identify a route setting device 4, which functions as an edge router, from the IP address of a device of the communication peer, or by comparing the IP address of the device with the IP address of the communication device 2. For transmitting exploration packets to a plurality of devices, the exploration packets may be transmitted to the respective devices in order or may be transmitted in a broadcast way by multicast. Specifically, an exploration packet, in which the following information is described, is transmitted on the basis of the above communication device identification information. It is to be noted that the route setting device identification information of the route setting devices 4, 4, ... to be the destination of transmission of an exploration packet can be obtained by reading the same from the route setting device database 12a.

Discovery Request
target IP: 192.168.10.2
target Port: 4917
Return IP: 192.168.20.3
Return Port: 2508

In the above exploration packet, a command to return a response on whether communication of the first communication device 2a having an IP address of "192.168.10.2" and a port number of "4917" is being relayed or not to a port number of "2508" of the route changing device 1 having an IP address of "192.168.20.3" is described. A response to the exploration packet includes the following information, for example.

Discovery Response
Result: found
target IP: 192.168.10.2
target Port: 4917
Peer IP: 192.168.23.55
Peer Port: 4917

The above response indicates that communication of the first communication device 2a having an IP address of "192.168.10.2" and a port number of "4917" is being relayed and the second communication device 2b, which is the communication peer, has an IP address of "192.168.23.55" and a port number of "4917". Moreover, a response to the exploration packet sometimes may include the following information.

Discovery Response
Result: not found
target IP: 192.168.10.2
target Port: 4917

The above response indicates that communication of the first communication device 2a having an IP address of "192.168.10.2" and a port number of "4917" is not being relayed. Identification of the route setting device identification information is achieved in such a manner.

To return to the description of the sequence diagram, the route changing device 1 transmits a packet of an intercept command to cause duplication, transmission to the intercept device 6 and return to the route setting device 4 from the communication unit 14 to the duplicating device 5 in response to the speech communication packet transmitted from the route setting device 4 as to the communication on the call between the first communication device 2a and the second communication device 2b identified by the communication device identification information, by the processing of the route changing means 10d based on the control of the control unit 10 (S209). In the intercept command to be transmitted at the step S209, intercept device identification information such as an IP address for identifying a position on the packet network 100 of the intercept device 6 read from the intercept request is described. It is to be noted that the route changing device 1 prerecords duplicating device identification information such as an IP address for identifying a position on the packet network 100 of the duplicating device 5 and transmits the intercept command on the basis of the recorded duplicating device identification information. When a plurality of duplicating device identification information is recorded, that is, when there are a plurality of duplicating devices 5, 5, ... to be the candidates of transmission of an intercept command, the route changing device 1 selects the most suitable duplicating device 5 on the basis of a factor such as a distance on the packet network 100 from the route setting device 4 or processing load of the respective duplicating devices 5, 5, ... .

Furthermore, the route changing device 1 transmits a packet of a route changing command for changing a communication route related to communication on the call between the first communication device 2a and the second communication device 2b identified by the communication device identification information, from the communication unit 14 to the route setting device 4 identified by the route setting device identification information by the processing of the route changing means 10d based on the control of the control unit 10 (S210). The route changing command to be transmitted at the step S210 is a command for changing the route table 41a in such a way that a speech communication packet to the second communication device 2b received from the first communication device 2a is transmitted to the duplicating device 5, a speech communication packet to the second communication device 2b received from the duplicating device 5 is transmitted to the second communication device 2b, a speech communication packet to the first communication device 2a received from the second communication device 2b is transmitted to the duplicating device 5, and a speech communication packet to the first communication device 2a received from the duplicating device 5 is transmitted to the first communication device 2a, as to the communication on the call between the first communication device 2a and the second communication device 2b identified by the communication device identification information.

The duplicating device 5 configures setting for interception related to communication between the first communication device 2a and the second communication device 2b on the basis of the intercept command received by the communication unit 52 under the control of the control unit 50 (S211).

The route setting device 4 changes a communication route of the first communication device 2a and the second communication device 2b recorded in the route table 41a on the basis of the route changing command received by the communication unit 42 by the processing of the route changing means 40c based on the control of the control unit 40 (S212). A route change process is executed in such a manner.

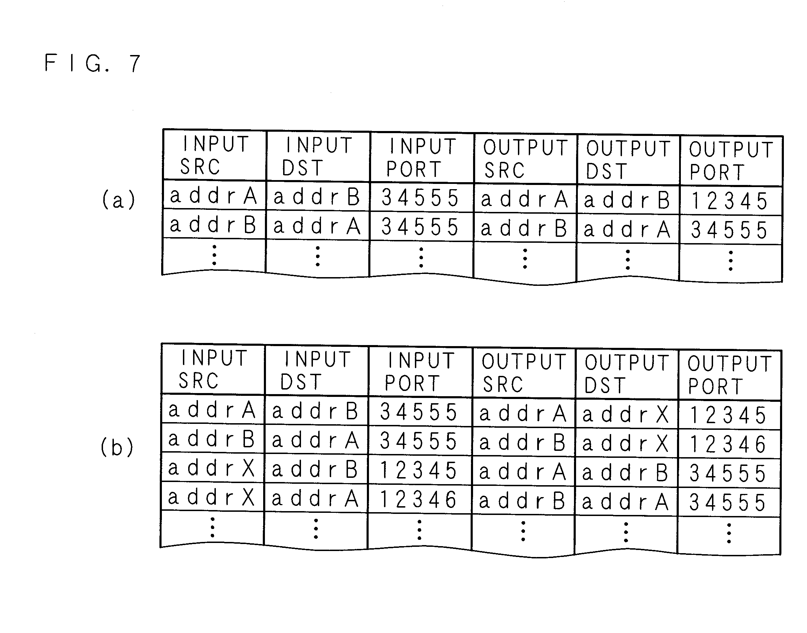

Hereinafter, the changing of a communication route described at the step S212 will be described. FIGs. 7A-7B are explanatory diagrams conceptually illustrating an example of the record content of the route table 41a of the route setting device 4 provided in the intercept system according to Embodiment 1 of the present invention. FIG. 7A illustrates the record content, in which a route set at the time of call connection establishment between the first communication device 2a and the second communication device 2b is described, while FIG. 7B illustrates the record content, in which a route obtained after the changing based on the route changing command is described. The route table 41a illustrated in each FIGs. 7A-7B is recorded as a record wherein an input SRC, an input DST and an input port representing an IP address of a source of transmission of a received speech communication packet, an IP address of a destination of transmission and a UDP port number of a destination of transmission are associated with an output SRC, an output DST and an output port representing an IP address of a source of transmission of a speech communication packet to be transmitted, an IP address of a destination of transmission and a port number of a destination of transmission. It is to be noted that addrA in FIG. 7 represents the IP address of the first communication device 2a and addrB represents the IP address of the second communication device 2b. Moreover, addrX represents the IP address of the duplicating device 5.

The record on the first line of FIG. 7A indicates that a received speech communication packet is transmitted to the second communication device 2b described as a destination of transmission when a speech communication packet having the first communication device 2a and the second communication device 2b as a source of transmission and a destination of transmission is received. The record on the second line of FIG. 7A indicates that a received speech communication packet is transmitted to the first communication device 2a described as a destination of transmission when a speech communication packet having the second communication device 2b and the first communication device 2a as a source of transmission and a destination of transmission is received.

The record on the first line of FIG. 7B indicates that a destination of transmission of a received speech communication packet is rewritten and transmitted to the duplicating device 5 when a speech communication packet having the first communication device 2a and the second communication device 2b as a source of transmission and a destination of transmission is received. The record on the second line of FIG. 7B indicates that a destination of transmission of a received speech communication packet is rewritten and transmitted to the duplicating device 5 when a speech communication assigned the second communication device 2b and the first communication device 2a as a source of transmission and a destination of transmission is received. The record on the third line of FIG. 7B indicates that a source of transmission of a received speech communication packet is rewritten and transmitted to the second communication device 2b when a speech communication packet assigned the duplicating device 5 and the second communication device 2b as a source of transmission and a destination of transmission is received. The record on the fourth line of FIG. 7B indicates that a source of transmission of a received speech communication packet is rewritten and transmitted to the first communication device 2a when a speech communication packet assigned the duplicating device 5 and the first communication device 2a as a source of transmission and a destination of transmission is received.

As illustrated in FIG. 7A, a route set at the time of call connection establishment represents that a speech communication packet to the second communication device 2b received from the first communication device 2a is transmitted to the second communication device 2b without modification and a speech communication to the first communication device 2a received from the second communication device 2b is transmitted to the first communication device 2a without modification. On the contrary, as illustrated in FIG. 7B, a route obtained after the changing represents a speech communication packet to the second communication device 2b received from the first communication device 2a is transmitted to the duplicating device 5 and a speech communication packet returned from the duplicating device 5 to the second communication device 2b is transmitted to the first communication device 2a after changing a source of transmission. Moreover, the route obtained after the changing represents a speech communication packet to the first communication device 2a received from the second communication device 2b is transmitted to the duplicating device 5 and a speech communication packet returned from the duplicating device 5 to the first communication device 2a is transmitted to the second communication device 2b after changing a source of transmission. This enables interception of a speech communication packet, which is not detected by the first communication device 2a and the second communication device 2b.

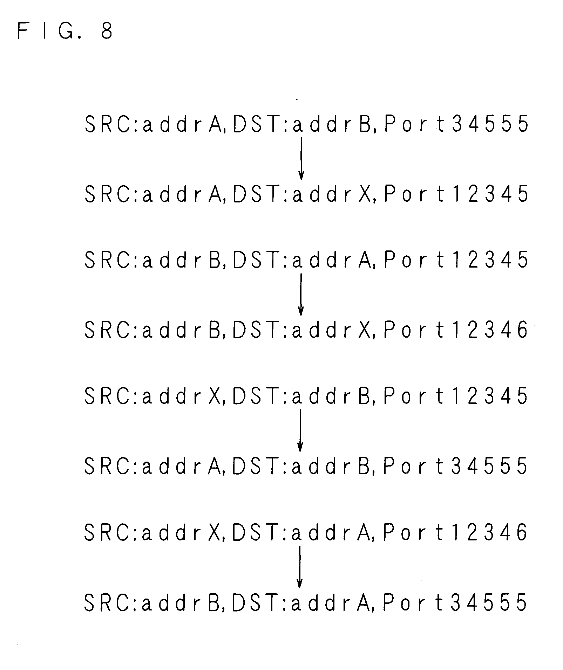

FIG. 8 is an explanatory diagram conceptually illustrating an example of a part of the content described in a route changing command transmitted from the route changing device 1 in the intercept system according to Embodiment 1 of the present invention. As illustrated in FIG. 8, a route changing command includes IP addresses of sources of transmission, IP addresses of destinations of transmission, and UDP ports number of destinations of transmission before and after the rewriting. For example, a speech communication packet having an IP address of a source of transmission, an IP address of a destination of transmission and a UDP port number of a destination of transmission being addrA, addrB and 34555 is rewritten with addrA, addrX and 12345. The route table 41a illustrated in FIG. 7 is rewritten on the basis of the route changing command illustrated in FIG. 8.

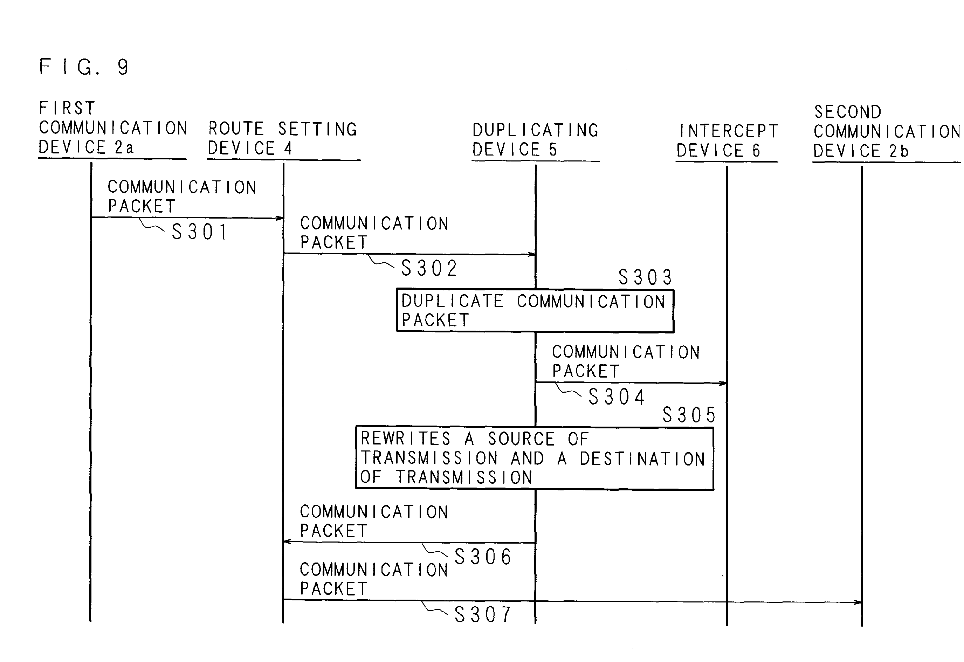

FIG. 9 is a sequence diagram illustrating an example of communication processing after the route changing of the intercept system according to Embodiment 1 of the present invention. Hereinafter, the processing in the case of transmission of a speech communication packet on the call from the first communication device 2a to the second communication device 2b after the route changing by the above route change process will be described. The first communication device 2a generates a speech communication packet including voice information based on a voice of the user, for example, and transmits the generated speech communication packet from the communication unit 25 to the route setting device 4 so as to transmit the packet further to the second communication device 2b (S301). A source of transmission and a destination of transmission of the speech communication packet to be transmitted at the step S301 are the first communication device 2a and the second communication device 2b.

The route setting device 4 rewrites a destination of transmission of the speech communication packet received by the communication unit 42 with the duplicating device 5 on the basis of the record content of the route table 41a by the processing of the packet transferring means 40b based on the control of the control unit 40 and transmits the packet from the communication unit 42 to the duplicating device 5, which is a destination of transmission obtained by the rewriting (S302).

The duplicating device 5 duplicates the speech communication packet received by the communication unit 52 by the processing of the duplicating means 50a based on the control of the control unit 50 (S303), transmits the duplicated speech communication packet from the communication unit 52 to the intercept device 6 (S304), rewrites a source of transmission and a destination of transmission of the received speech communication packet by the processing of the rewriting means 50b (S305), and transmits (returns) the speech communication packet obtained by the rewriting from the communication unit 52 to the route setting device 4 (S306). A source of transmission and a destination of transmission of the speech communication packet to be transmitted at the step S306 are the duplicating device 5 and the second communication device 2b.

The intercept device 6 receives the duplicated speech communication packet at the communication unit 64 under the control of the control unit 60, outputs a voice based on the voice information included in the received speech communication packet from the output unit 63, and records the voice information in the recording unit 61.

The route setting device 4 rewrites a source of transmission of the speech communication packet received by the communication unit 42 with the first communication device 2a on the basis of the record content of the route table 41a by the processing of the packet transferring means 40b based on the control of the control unit 40 and transmits the packet from the communication unit 42 to the second communication device 2b, which is described as a destination of transmission (S307).

The second communication device 2b receives the speech communication packet at the communication unit 25 and outputs a voice based on the voice information included in the received speech communication packet. Processing is performed along the opposite route when a speech communication packet is transmitted from the second communication device 2b to the first communication device 2a. The communication processing after the route changing is achieved in such a manner. This is an intercept system according to Embodiment 1 of the present invention.

### Embodiment 2

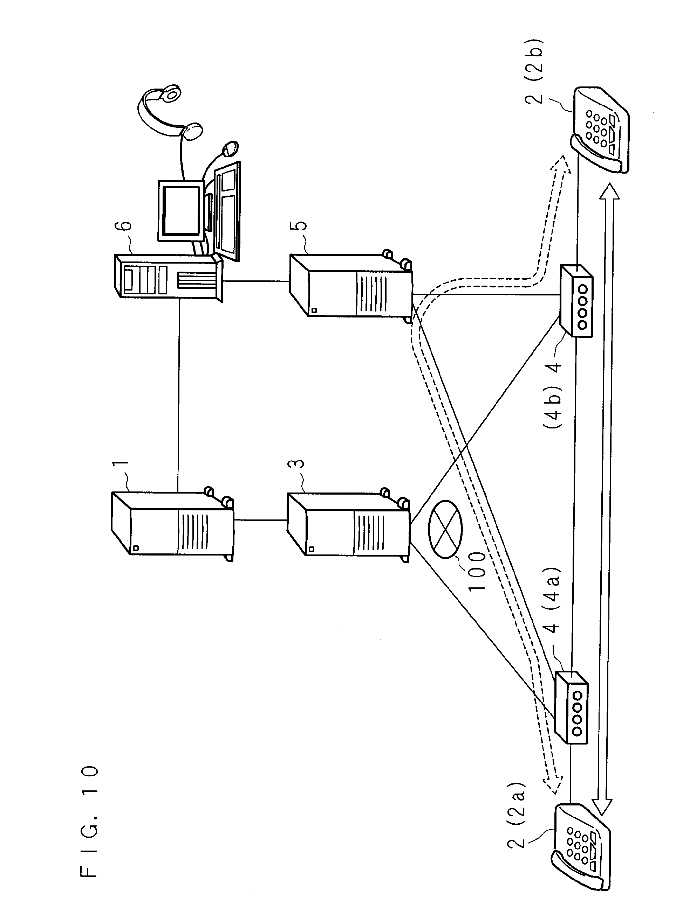

Embodiment 2 is an embodiment where, in Embodiment 1, a route along which a speech communication packet to be intercepted is transmitted back and forth between a route setting device and a duplicating device is not set but a route to be an alternate route is set using a plurality of route setting devices and a duplicating device. FIG. 10 is a conceptual diagram illustrating a configuration example of an intercept system according to Embodiment 2 of the present invention. In the following description, the identical symbol is used to refer to the same structure as that of Embodiment 1 and description thereof is omitted. Embodiment 2 is an embodiment for setting an alternate route using a plurality of route setting devices 4, 4, ... as edge routers. Assume that the communication between a first communication device 2a and a second communication device 2b is to be intercepted, an edge router for the first communication device 2a is a first route setting device 4a, and an edge router for the second communication device 2b is a second route setting device 4b in the following description.

The two-headed arrow drawn in full lines in FIG. 10 is a communication route between the first communication device 2a and the second communication device 2b set at the time of call connection establishment under the control of a call controller 3, and a speech communication packet for an IP telephone service is transferred along the communication route set by the route setting devices 4, 4, ... . The two-headed arrow drawn in dotted lines is a communication route changed under the control of a route changing device 1. Along the changed communication route, a speech communication packet transmitted between the first communication device 2a and the second communication device 2b is transferred from the first route setting device 4a, which is to be an edge router, to a duplicating device 5, duplicated by the duplicating device 5, and then transferred to the second route setting device 4b. It is to be noted that a speech communication packet duplicated by the duplicating device 5 is transmitted to an intercept device 6, so that communication can be intercepted by the intercept device 6.

Since the structure of hardware of the respective devices provided in the intercept system according to Embodiment 2 is the same as that of Embodiment 1 and will be understood by referring to Embodiment 1, description thereof is omitted.

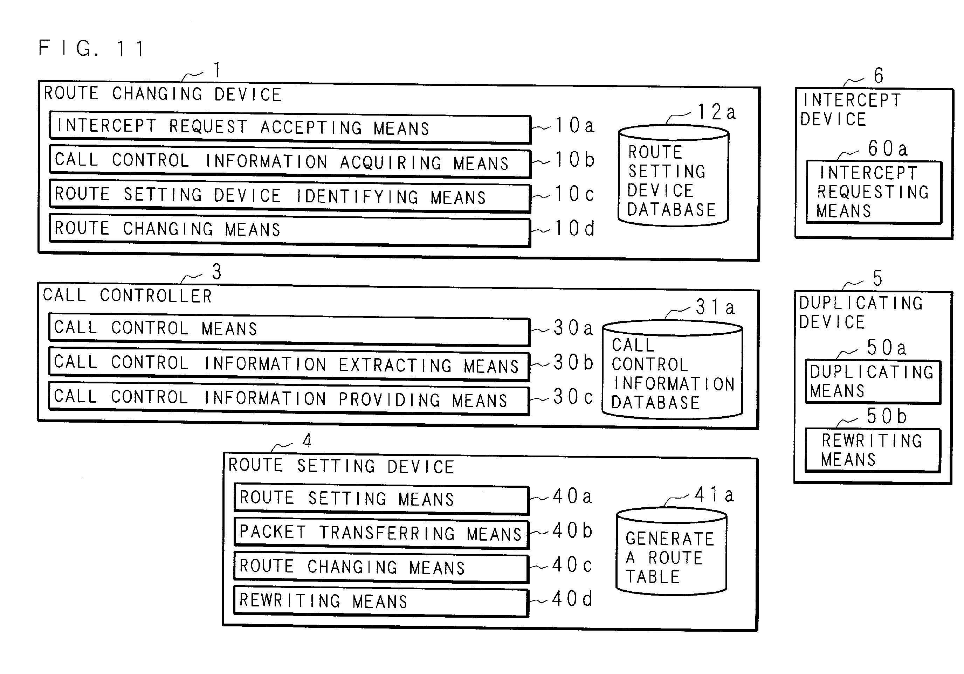

FIG. 11 is a functional block diagram illustrating an example of functions of the respective devices provided in the intercept system according to Embodiment 2 of the present invention. The route setting device 4 used in the intercept system of the present invention executes various kinds of computer programs at a control unit 40 so as to make the control unit 40 function as various kinds of program modules such as route setting means 40a, packet transferring means 40b, route changing means 40c and rewriting means 40d for rewriting information such as a destination of transmission of a speech communication packet. Moreover, the route setting device 4 executes various kinds of computer programs at the control unit 40 so as to generate a route table 41a for recording information related to a route set in a recording area of a recording unit 41.

Since the functions of the other devices are the same as those of Embodiment 1 and will be understood by referring to Embodiment 1, description thereof is omitted.

Next, the processing of various kinds of devices provided in the intercept system according to Embodiment 2 of the present invention will be described. Since a call connection establishment process of the intercept system according to Embodiment 2 is the same as that of Embodiment 1 and will be understood by referring to Embodiment 1, description thereof is omitted.

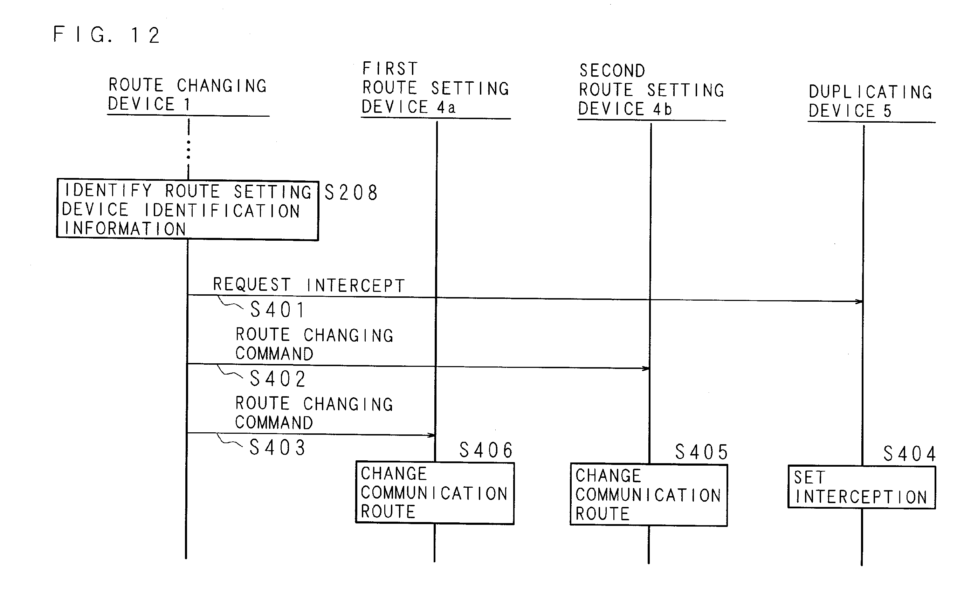

FIG. 12 is a sequence diagram illustrating an example of a route change process of the intercept system according to Embodiment 2 of the present invention. In the intercept system of Embodiment 2, route setting device identification information of a route setting device 4, which is to be an edge router, is identified by the process at the steps S201 to S208 of the route change process according to Embodiment 1. It is to be noted that route setting device identification information of both of the first route setting device 4a and the second route setting device 4b is identified in Embodiment 2.

The route changing device 1 then transmits a packet of an intercept command for duplicating a speech communication packet transmitted from the first route setting device 4a and from the second route setting device 4b, transmitting the packet to the intercept device 6 and transferring the packet to the second route setting device 4b and to the first route setting device 4a, from a communication unit 14 to the duplicating device 5 as to the communication on the call between the first communication device 2a and the second communication device 2b by the processing of a route changing means 10d based on the control of a control unit 10 (S401). The transfer to the route setting device 4 at the step S401 is a process of transmitting a speech communication packet received from the first route setting device 4a to the second route setting device 4b and transmitting a speech communication packet received from the second route setting device 4b to the first route setting device 4a.

Moreover, the route changing device 1 transmits a packet of a route changing command from a communication unit 14 to the second route setting device 4b by the processing of the route changing means 10d based on the control of the control unit 10 (S402). The route changing command to be transmitted at the step S402 is a command for changing the route table 41a in such a way that a speech communication packet to the first communication device 2a received from the second communication device 2b is transmitted to the duplicating device 5 and a speech communication packet to the second communication device 2b received from the duplicating device 5 is transmitted to the second communication device 2b, as to the communication on the call between the first communication device 2a and the second communication device 2b. It is to be noted that the second route setting device 4b rewrites a source of transmission with the first communication device 2a by the rewriting means 40d when transmitting a speech communication packet received from the duplicating device 5 to the second communication device 2b.

Furthermore, the route changing device 1 transmits a packet of a route changing command from the communication unit 14 to the first route setting device 4a by the processing of the route changing means 10d based on the control of the control unit 10 (S403). The route changing command to be transmitted at the step S403 is a command for changing the route table 41a in such a way that a speech communication packet to the second communication device 2b received from the first communication device 2a is transmitted to the duplicating device 5 and a speech communication packet to the first communication device 2a received from the duplicating device 5 is transmitted to the first communication device 2a, as to the communication on the call between the first communication device 2a and the second communication device 2b. It is to be noted that the first route setting device 4a rewrites a source of transmission with the second communication device 2b by the rewriting means 40d when transmitting a speech communication packet received from the duplicating device 5 to the first communication device 2a.

The duplicating device 5 configures setting of interception related to communication between the first communication device 2a and the second communication device 2b on the basis of the intercept command received by a communication unit 52 under the control of a control unit 50 (S404).

The second route setting device 4b changes a communication route of the first communication device 2a and the second communication device 2b recorded in the route table 41a on the basis of the route changing command received by a communication unit 42 by the processing of the route changing means 40c based on the control of the control unit 40 (S405).

The first route setting device 4a changes a communication route of the first communication device 2a and the second communication device 2b recorded in the route table 41a on the basis of the route changing command received by the communication unit 42 by the processing of the route changing means 40c based on the control of the control unit 40 (S406). When a duplicating device 5 used for interception is to be selected from a plurality of duplicating devices 5, 5, ... for the route setting, a duplicating device 5 which realizes the shortest alternate route is selected preferentially. Moreover, a router other than the first route setting device 4a and the second route setting device 4b to be the edge routers may be specified, so that the shortest alternate route is set. A route change process is executed in such a manner.

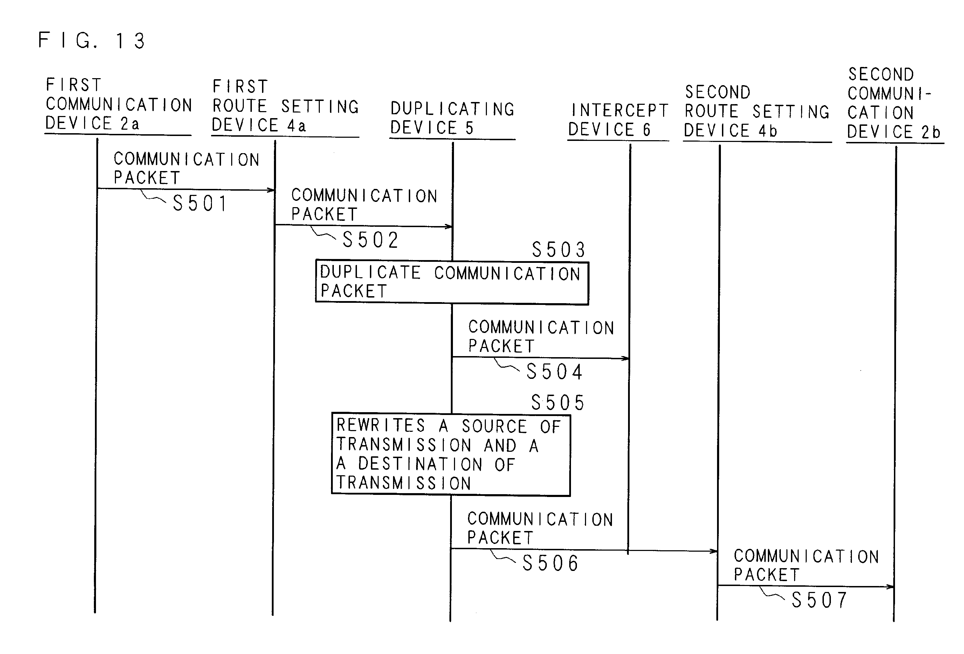

FIG. 13 is a sequence diagram illustrating an example of communication processing after the route changing of the intercept system according to Embodiment 2 of the present invention. Hereinafter, the processing in the case of transmission of a speech communication packet on the call from the first communication device 2a to the second communication device 2b after the route changing by the above route change process will be described. The first communication device 2a generates a speech communication packet including voice information based on a voice of the user, for example, and transmits the generated speech communication packet from a communication unit 25 to the first route setting device 4a so as to transmit the packet further to the second communication device 2b (S501). A source of transmission and a destination of transmission of the speech communication packet to be transmitted at the step S501 are the first communication device 2a and the second communication device 2b.

The first route setting device 4a rewrites a destination of transmission of the speech communication packet received by the communication unit 42 with the duplicating device 5 on the basis of the record content of the route table 41a by the processing of the packet transferring means 40b based on the control of the control unit 40 and transmits the packet from the communication unit 42 to the duplicating device 5, which is a destination of transmission obtained by the rewriting (S502).

The duplicating device 5 duplicates the communication packet received by the communication unit 52 by the processing of duplicating means 50a based on the control of the control unit 50 (S503), transmits the duplicated speech communication packet from the communication unit 52 to the intercept device 6 (S504), rewrites a source of transmission and a destination of transmission of the received speech communication packet by the processing of the rewriting means 50b (S505), and transmits (transfers) the speech communication packet obtained by the rewriting from the communication unit 52 to the second route setting device 4b (S506). A source of transmission and a destination of transmission of the speech communication packet to be transmitted at the step S506 are the duplicating device 5 and the second communication device 2b.

The intercept device 6 receives the speech communication packet duplicated by a communication unit 64 under the control of a control unit 60, outputs a voice based on the voice information included in the received speech communication packet from an output unit 63, and records the voice information in a recording unit 61.

The second route setting device 4b rewrites a source of transmission of the speech communication packet received by the communication unit 42 with the first communication device 2a on the basis of the record content of the route table 41a by the processing of the packet transferring means 40b and the rewriting means 40d based on the control of the control unit 40, and transmits the packet from the communication unit 42 to the second communication device 2b, which is described as a destination of transmission (S507).

The second communication device 2b receives the speech communication packet at the communication unit 25 and outputs a voice based on the voice information included in the received speech communication packet. Processing is performed along the opposite route when a speech communication packet is transmitted from the second communication device 2b to the first communication device 2a. The communication processing after the route changing is achieved in such a manner. This is an intercept system according to Embodiment 2 of the present invention.

### Embodiment 3

Embodiment 3 is an embodiment where, in Embodiment 1, interception is not requested after call connection between communication devices is established but a route for interception is set when a preregistered communication device connects a call. Since the structure of an intercept system and the structure of hardware of the respective devices according to Embodiment 3 are the same as those of Embodiment 1 and will be understood by referring to Embodiment 1, description thereof is omitted. In the following description, it is to be noted that the identical symbol is used to refer to the same structure as that of Embodiment 1.

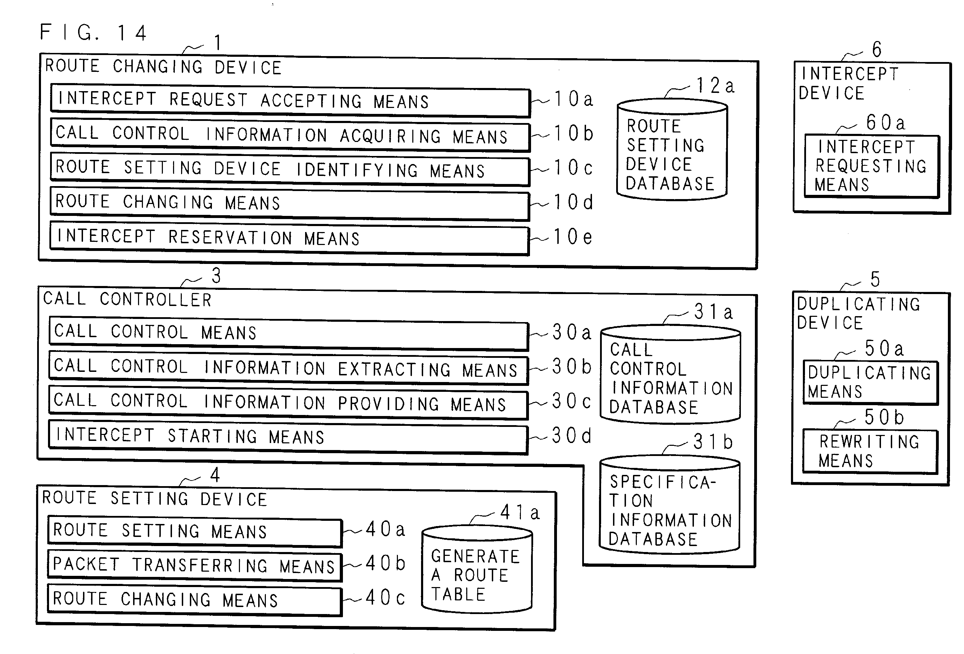

FIG. 14 is a functional block diagram illustrating en example of functions of the respective devices provided in the intercept system according to Embodiment 3 of the present invention. A route changing device 1 of the present invention executes various kinds of computer programs related to communication interception such as a computer program 200 at a control unit 10 so as to make the control unit 10 function as various kinds of program modules such as intercept request accepting means 10a, call control information acquiring means 10b, route setting device identifying means 10c, route changing means 10d and intercept reservation means 10e for accepting reservation of a communication device 2 to be intercepted. Moreover, the route changing device 1 of the present invention executes various kinds of computer programs related to communication interception such as the computer program 200 at the control unit 10 so as to generate various kinds of databases such as a route setting device database 12a in a recording area of a recording unit 12.

A call controller 3 used in the intercept system of the present invention executes various kinds of computer programs at a control unit 30 so as to cause the control unit 30 to function as various kinds of program modules such as call control means 30a, call control information extracting means 30b, call control information providing means 30c and intercept starting means 30d for automatically starting interception of communication related to the communication device 2, interception of which has been reserved. Moreover, the call controller 3 executes various kinds of computer programs at the control unit 30 so as to generate various kinds of databases such as a call control information database 31a and a specification information database (specification information DB) 31b for recording specification information such as a telephone number for specifying the communication device 2, communication of which is to be intercepted, in a recording area of a recording unit 31.

Since the functions of the other devices are the same as those of Embodiment 1 and will be understood by referring to Embodiment 1, description thereof is omitted.

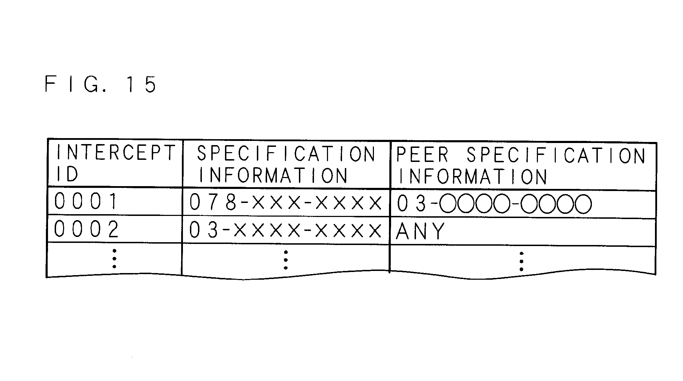

FIG. 15 is an explanatory diagram conceptually illustrating an example of the record content of the specification information database 31b provided in the call controller 3 according to Embodiment 3 of the present invention. In the specification information database 31b, specification information such as a telephone number for specifying a communication device 2, communication of which is to be intercepted, and peer specification information such as a telephone number for specifying a communication device 2, which is to be the communication peer of the communication device 2 specified in the specification information, are recorded in association with an intercept ID assigned for management. For example, when a call is accepted from a communication device 2 having specification information of "078-xxx-xxxx" or a communication device 2 having specification information of "078-xxx-xxxx" is specified as a called party and specification information of the device of the peer is "03-oooo-oooo", the call from the route changing device 1 is to be intercepted. Moreover, for example, when a call is accepted from a communication device 2 having specification information of "03-xxxx-xxxx" or a communication device 2 having specification information of "03-xxxx-xxxx" is specified as a called party, the route changing device 1 intercepts the call regardless of the device of the peer.

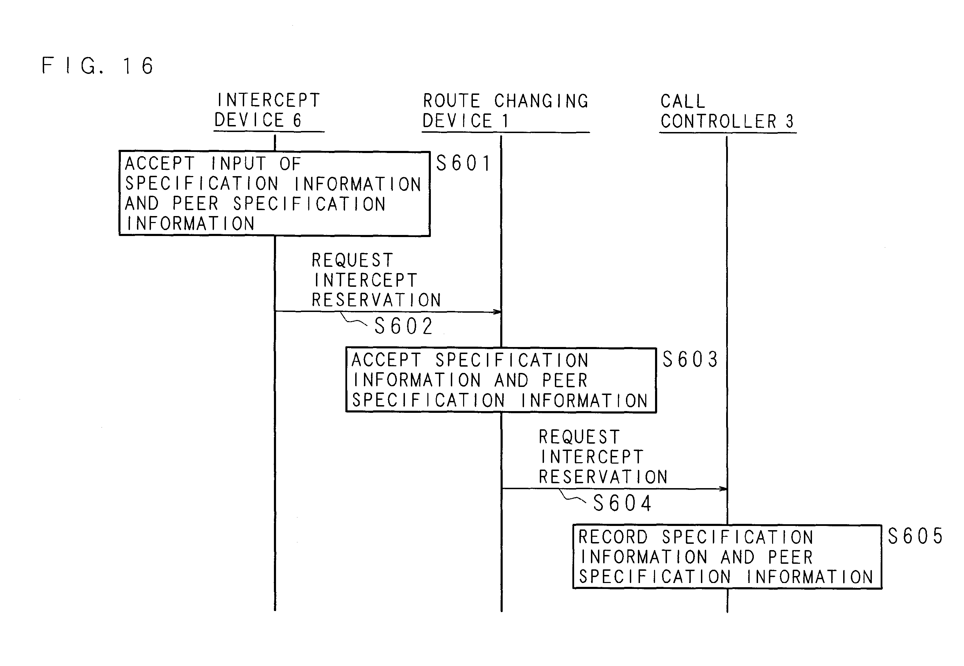

Next, the processing of various kinds of devices provided in the intercept system according to Embodiment 3 of the present invention will be described. FIG. 16 is a sequence diagram illustrating an example of an intercept reservation process of the intercept system according to Embodiment 3 of the present invention. The user of an intercept device 6 inputs specification information such as a telephone number for specifying a communication device 2, communication interception of which is to be reserved, and peer specification information into the intercept device 6. The intercept device 6 accepts the input of the specification information and the peer specification information from an operation unit 62 by the processing of intercept requesting means 60a based on the control of a control unit 60 (S601) and transmits a packet of an intercept reservation request described in the accepted specification information and peer specification information from a communication unit 64 to the route changing device 1 (S602). It is to be noted that the user may input only specification information of one communication device 2, and the peer specification information is treated as "ANY" in such a case.

The route changing device 1 accepts the intercept reservation request received by a communication unit 14 by the processing of the intercept reservation means 10e based on the control of the control unit 10 for executing the computer program 200 of the present invention (S603) and transmits a packet of the accepted intercept reservation request from the communication unit 14 to the call controller 3 (S604).

The call controller 3 assigns an intercept ID to the specification information and the peer specification information described in the intercept reservation request received by a communication unit 32 by the processing of the intercept starting means 30d based on the control of the control unit 30 and records the intercept ID in the specification information database 31b (S605). An intercept reservation process is executed in such a manner.

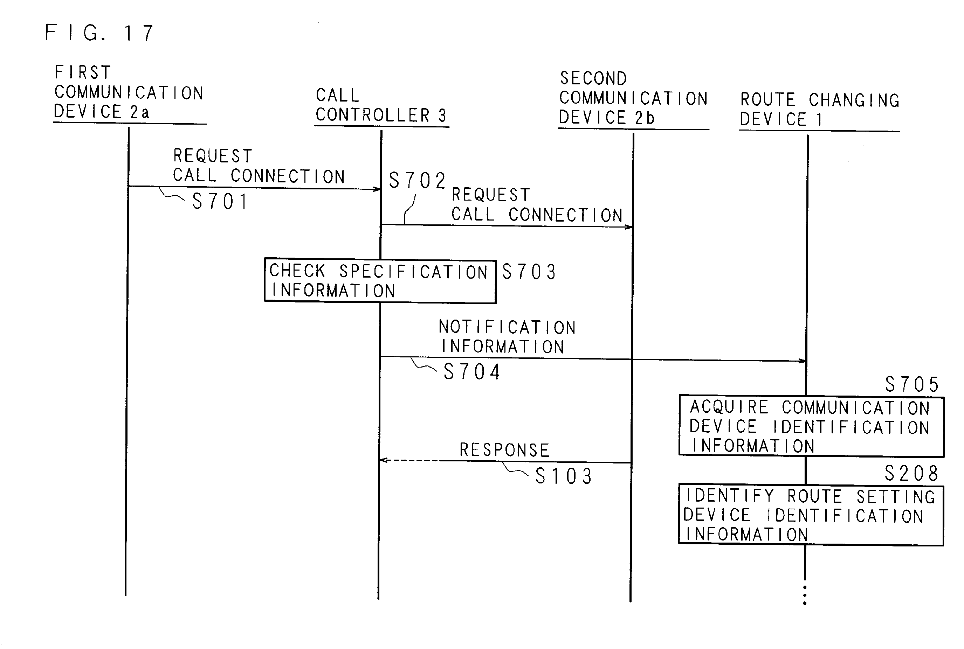

FIG. 17 is a sequence diagram illustrating an example of an intercept start process of the intercept system according to Embodiment 3 of the present invention. A first communication device 2a accepts an operation of the user such as input of a telephone number at an operation unit 22 under the control of a control unit 20 and transmits a packet of a call connection request from a communication unit 25 to the call controller 3 (S701). In the call connection request to be transmitted at the step S701, specification information for specifying a second communication device 2b as a called party, such as the accepted telephone number, and specification information for specifying the first communication device 2a to be a calling party are described.

The call controller 3 accepts the call connection request at the communication unit 32 by the processing of the call control means 30a based on the control of the control unit 30, converts the specification information to be a called party, which is described in the accepted call connection request, into communication device identification information of the second communication device 2b, and transmits a packet of a call connection request from the communication unit 32 to the second communication device 2b identified by the communication device identification information obtained by the conversion (S702).

Furthermore, the call controller 3 checks the specification information of a called party and the specification information of a calling party described in the accepted call connection request, i.e., the specification information on the call against specification information recorded in the specification information database 31b by the processing of the intercept starting means 30d based on the control of the control unit 30 (S703) and, when it is judged that specification information consistent with at least one of the specification information of a called party and the specification information of a calling party is recorded in the specification information database 31b, the call controller 3 determines that a call related to a communication device 2, which is set to be intercepted, has been detected and transmits a packet of notification information for giving a notice of the detection from the communication unit 32 to the route changing device 1 (S704). When it is judged from the checking at the step S703 that specification information consistent with the specification information on the call is not recorded in the specification information database 31b, a normal call connection establishment process is executed as described in Embodiment 1. In the notification information to be transmitted at the step S704, call control information such as communication device identification information corresponding to specification information on the call is described.

After transmitting the packet of the call connection request at the step S702, call connection is established and communication on the call is started in the intercept system of Embodiment 3 as in the process after the step S103 of the call connection establishment process of Embodiment 1.

The route changing device 1 acquires the communication device identification information from the notification information received by the communication unit 14 under the control of the control unit 10 (S705). Then, a process for changing a communication route is performed in the intercept system of Embodiment 3 as in the process after the step S208 of the route change process of Embodiment 1. An intercept start process is executed in such a manner.

Since the communication processing after the route changing according to Embodiment 3 is the same as that of Embodiment 1 and will be understood by referring to Embodiment 1, description thereof is omitted. This is an intercept system according to Embodiment 3 of the present invention.

### Embodiment 4

Embodiment 4 is an embodiment where, in Embodiment 3, a route related to a call to be intercepted is set by a call controller in such a way that the route goes through a specified route setting device. Since the structure of an intercept system and the structure of hardware of the respective devices according to Embodiment 4 are the same as those of Embodiment 1 and will be understood by referring to Embodiment 1, description thereof is omitted. In the following description, it is to be noted that the identical symbol is used to refer to the same structure as that of Embodiment 1.

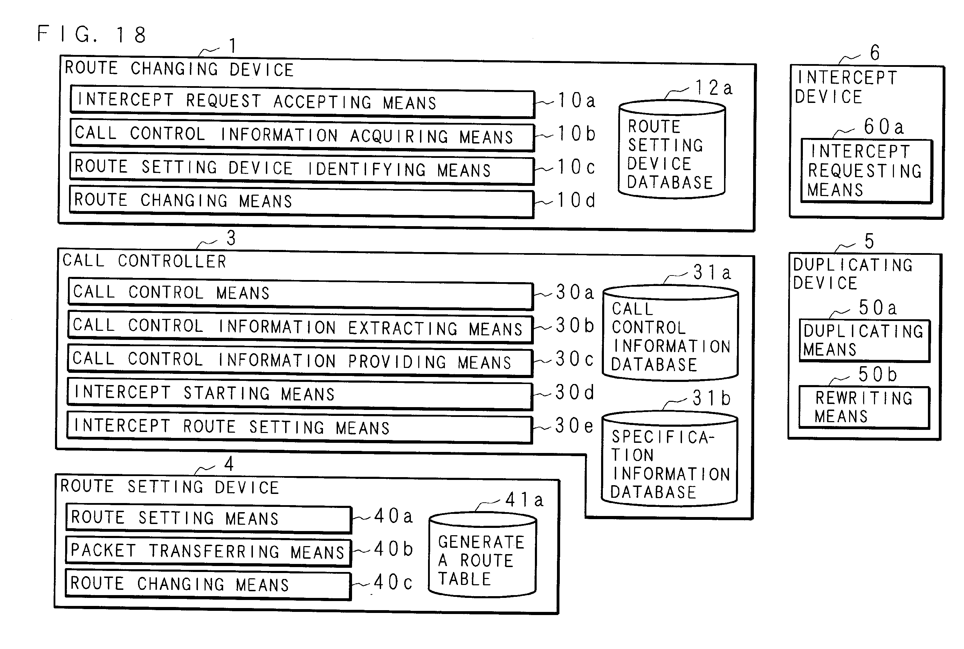

FIG. 18 is a functional block diagram illustrating an example of functions of the respective devices provided in the intercept system according to Embodiment 4 of the present invention. A call controller 3 used in the intercept system of the present invention executes various kinds of computer programs at a control unit 30 so as to make the control unit 30 function as various kinds of program modules such as call control means 30a, call control information extracting means 30b, call control information providing means 30c, intercept starting means 30d and intercept route setting means 30e for setting a route for interception of communication related to a communication device 2, interception of which is reserved. Moreover, the call controller 3 executes various kinds of computer programs at the control unit 30 so as to generate various kinds of databases such as a call control information database 31 and a specification information database 31b in a recording area of a recording unit 31.

Since the functions of the other devices are the same as those of Embodiment 1 and will be understood by referring to Embodiment 1, description thereof is omitted.

Next, the processing of various kinds of devices provided in the intercept system according to Embodiment 4 of the present invention will be described. Since an intercept reservation process of the intercept system according to Embodiment 4 of the present invention is the same as that of Embodiment 3 and will be understood by referring to Embodiment 3, description thereof is omitted.

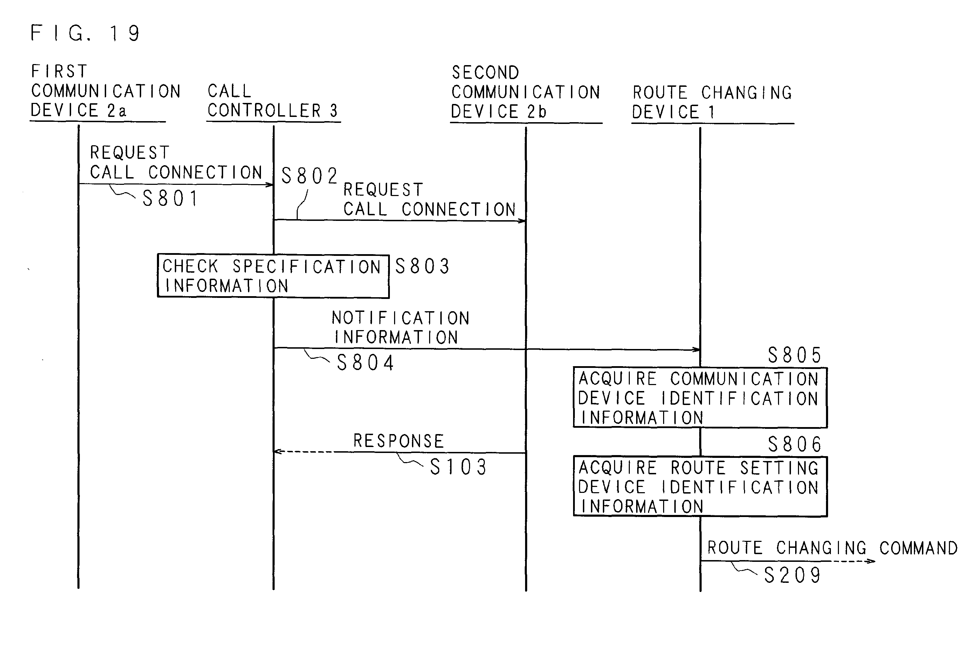

FIG. 19 is a sequence diagram illustrating an example of an intercept start process of the intercept system according to Embodiment 4 of the present invention. A first communication device 2a accepts an operation of the user such as input of a telephone number at an operation unit 22 under the control of a control unit 20 and transmits a packet of a call connection request from a communication unit 25 to the call controller 3 (S801). In the call connection request to be transmitted at the step S801, specification information for specifying a second communication device 2b as a called party, such as the accepted telephone number, and specification information for specifying the first communication device 2a, which is to be a calling party, are described.

The call controller 3 accepts the call connection request at a communication unit 32 by the processing of the call control means 30a based on the control of the control unit 30, converts the specification information, which is to be a called party, described in the accepted call connection request into communication device identification information of the second communication device 2b, and transmits a packet of a call connection request from the communication unit 32 to the second communication device 2b identified by the communication device identification information obtained by the conversion (S802).

Furthermore, the call controller 3 checks the specification information of a called party and the specification information of a calling party described in the accepted call connection request, i.e., the specification information on the call against specification information recorded in the specification information database 31b by the processing of the intercept starting means 30d based on the control of the control unit 30 (S803) and, when it is judged that specification information consistent with at least one of specification information of a called party and specification information of a calling party is recorded in the specification information database 31b, the call controller 3 determines that a call related to a communication device 2, which is set to be intercepted, has been detected and transmits a packet of notification information for giving a notice of the detection, in which the route setting device identification information is described, from the communication unit 32 to a route changing device 1 (S804). An embodiment wherein the specification information on the call is checked against a record having one of specification information being recorded and the other being "ANY" is illustrated at the step S803 for ease explanation, though an embodiment wherein the specification information on the call is checked against a record having both of specification information and peer specification information being specified may be employed. The route setting device identification information described in the packet to be transmitted at the step S804 is written by the intercept route setting means 30e, and the written route setting device identification information may be preset or identified by the method described in Embodiment 1, for example.

After transmitting the packet of the call connection request at the step S802, call connection is established and communication on the call is started in the intercept system of Embodiment 4 as in the process after the step S103 of the call connection establishment process of Embodiment 1. It is to be noted that the communication route related to call connection set here is a route for interception set by the processing of the intercept route setting means 30e and goes through a route setting device 4 identified by the route setting device identification information described in the packet transmitted at the step S804.

The route changing device 1 acquires the communication device identification information from the notification information received by a communication unit 14 under the control of a control unit 10 (S805) and further acquires route setting device identification information from the notification information (S806). A process for changing the communication route is then performed in the intercept system of Embodiment 4 as in the process after the step S209 of the route change process of Embodiment 1. An intercept start process is executed in such a manner.

Since the communication processing after the route changing according to Embodiment 4 is the same as that of Embodiment 1 and will be understood by referring to Embodiment 1, description thereof is omitted. This is an intercept system according to Embodiment 4 of the present invention.

### Embodiment 5

Embodiment 5 is an embodiment where, in Embodiment 1, encrypted communication is intercepted. Since the structure of an intercept system and the structure of hardware of the respective devices according to Embodiment 5 are the same as those of Embodiment 1 and will be understood by referring to Embodiment 1, description thereof is omitted. In the following description, it is to be noted that the identical symbol is used to refer to the same structure as that of Embodiment 1.

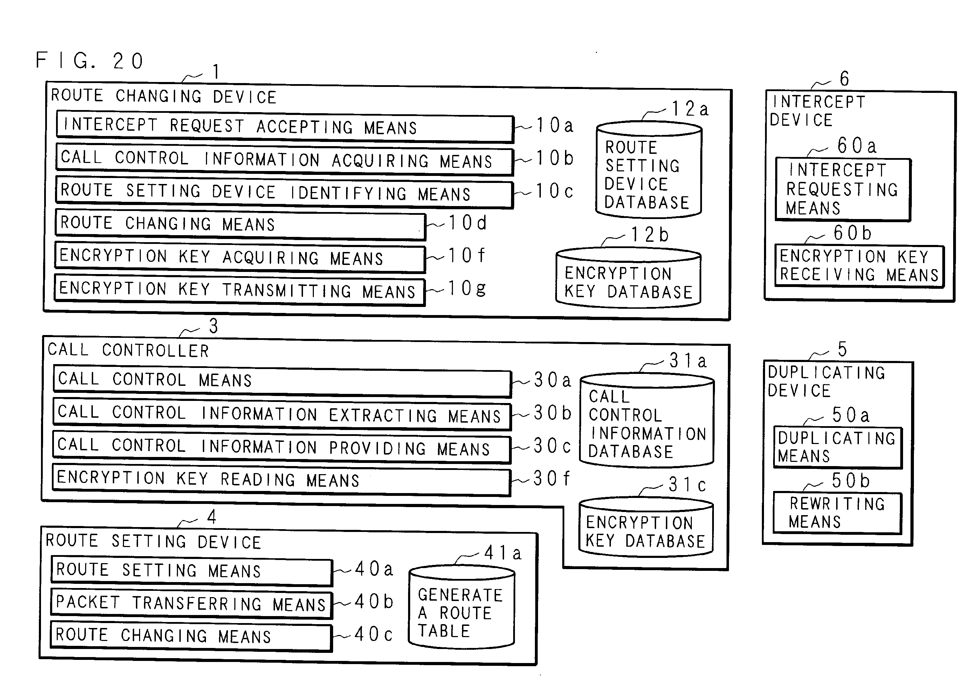

FIG. 20 is a functional block diagram illustrating an example of functions of the respective devices provided in the intercept system according to Embodiment 5 of the present invention. The route changing device 1 of the present invention executes various kinds of computer programs related to communication interception such as a computer program 200 at a control unit 10 so as to make the control unit 10 function as various kinds of program modules such as intercept request accepting means 10a, call control information acquiring means 10b, route setting device identifying means 10c, route changing means 10d, encryption key acquiring means 10f for acquiring an encryption key used for communication from a call controller 3, and encryption key transmitting means 10g for transmitting the acquired encryption key to an intercept device 6. Moreover, the route changing device 1 of the present invention executes various kinds of computer programs related to communication interception such as the computer program 200 at the control unit 10 so as to generate various kinds of databases such as a route setting device database 12a and an encryption key database (encryption key DB) 12b for recording the acquired encryption key in a recording area of a recording unit 12.

The call controller 3 used in the intercept system of the present invention executes various kinds of computer programs at a control unit 30 so as to cause the control unit 30 to function as various kinds of program modules such as call control means 30a, call control information extracting means 30b, call control information providing means 30c and encryption key reading means 30f for reading an encryption key related to communication. Moreover, the call controller 3 executes various kinds of computer programs at the control unit 30 so as to generate various kinds of databases such as a call control information database 31a and an encryption key database (encryption key DB) 31c for recording an encryption key in a recording area of a recording unit 31.

The intercept device 6 used in the intercept system of the present invention executes various kinds of computer programs at a control unit 60 so as to make the control unit 60 function as various kinds of program modules such as intercept requesting means 60a and encryption key receiving means 60b for receiving an encryption key.

Since the functions of the other devices are the same as those of Embodiment 1 and will be understood by referring to Embodiment 1, description thereof is omitted.

Next, the processing of various kinds of devices provided in the intercept system according to Embodiment 5 will be described. In Embodiment 5, the same processing as that of Embodiment 1 is executed as a call connection establishment process. Here, a first communication device 2a and a second communication device 2b exchange the respective encryption keys through the call controller 3 as encryption key exchange while establishing call connection. The call controller 3 records the duplication of the respective encryption keys in the encryption key database 31c while relaying the encryption key exchange. Furthermore, the same processing as that of Embodiment 1 is executed as a route change process in Embodiment 5. Here, the call control information to be transmitted from the call controller 3 to the route changing device 1 indicates that communication, the route of which is to be changed, is encrypted.

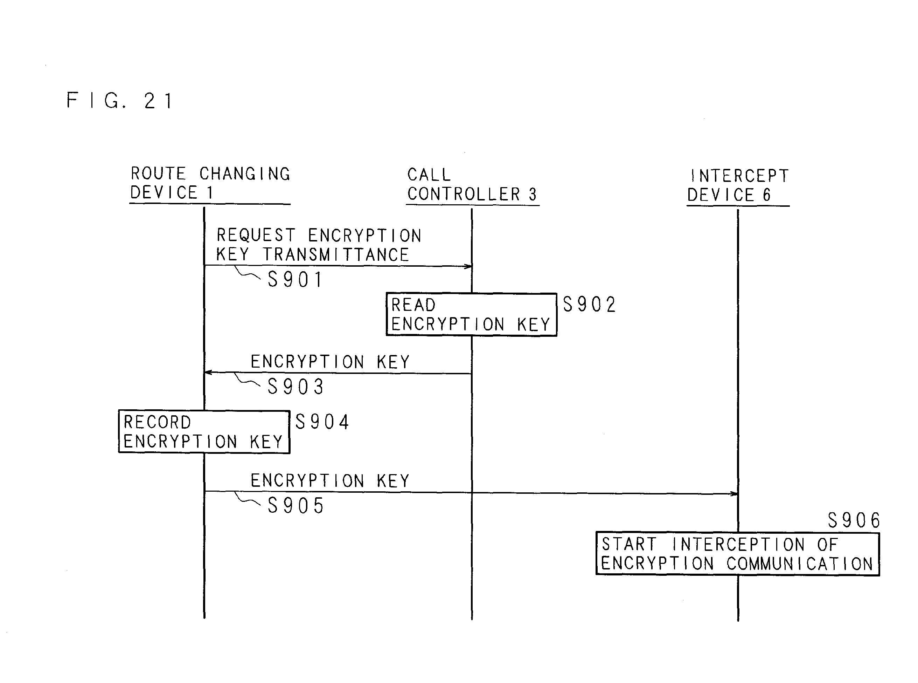

FIG. 21 is a sequence diagram illustrating an example of an intercept start process of the intercept system according to Embodiment 5 of the present invention. The route changing device 1, which has detected from the call control information acquired from the call controller 3 that the communication to be intercepted is encrypted, transmits a packet of an encryption key transmittance request for requesting transmission of an encryption key from a communication unit 14 to the call controller 3 by the processing of the encryption key acquiring means 10f based on the control of the control unit 10 for executing the computer program 200 of the present invention (S901). The encryption key transmittance request to be transmitted at the step S901 includes information for identifying the communication to be intercepted, which has been acquired from the call control information.

The call controller 3 receives the encryption key transmittance request at a communication unit 32 under the control of the control unit 30, reads an encryption key related to the communication identified by the encryption key transmittance request from the encryption key database 31c with the encryption key reading means 30f using a method such as an MITM (Man In The Middle) attack by using the position thereof to relay the key exchange performed using the call control communication (S902), and transmits a packet including the read encryption key from the communication unit 32 to the route changing device 1 (S903).

The route changing device 1 receives the encryption key at the communication unit 14 by the processing of the encryption key acquiring means 10f based on the control of the control unit 10, records the received encryption key in the encryption key database 12b (S904) and, furthermore, transmits a packet including the duplication of the encryption key from the communication unit 14 to the intercept device 6 with the encryption key transmitting means 10g (S905).

The intercept device 6 receives the encryption key at a communication unit 64 by the processing of the encryption key receiving means 60b based on the control of the control unit 60, decrypts voice information included in the speech communication packet received from the duplicating device 5 with the received encryption key, and starts interception of encrypted communication for outputting a voice based on the decrypted voice information from an output unit 63 (S906). An intercept start process is executed in such a manner. This is an intercept system according to Embodiment 5 of the present invention.

A method for realizing the present invention is not limited to Embodiments 1 to 5 described above but can be developed in a variety of embodiments. For example, though an embodiment for intercepting bilateral communication is described in Embodiments 1 to 5, the present invention is not limited to this but can be applied in a variety of embodiments, such as an embodiment for intercepting communication using three or more communication devices such as trilateral communication.

Moreover, though an embodiment for intercepting voice communication is described in Embodiments 1 to 5, the present invention can be developed in a variety of embodiments such as an embodiment for intercepting communication including an image such as a video phone, a video conference or a monitoring camera.

Furthermore, though an embodiment wherein an intercept device, a duplicating device and a route changing device are respectively separate devices is illustrated in Embodiments 1 to 5, the present invention is not limited to this and the three devices can be constructed as two or one device, or can be constructed as four or more devices.

It is to be noted that Embodiments 1 to 5 can be respectively executed independently, or can be executed in combination in a suitable manner when needed. For example, the present invention can be developed in a variety of embodiments such as an embodiment wherein Embodiments 3 and 5 are combined and a call controller duplicates only an encryption key related to a preregistered communication device.

## Claims

1. An intercept system for intercepting communication on a call, having a call controller for controlling a call between a plurality of communication devices connected through a packet network and a route setting device for setting a route along which communication on a call between the communication devices is relayed, the intercept system, **characterized by** comprising:
a duplicating device for duplicating a packet to be intercepted;
means for acquiring communication device identification information for identifying positions on the packet network of the communication devices from the call controller;
means for setting the route setting device in such a way that a packet received from one communication device is transmitted to the duplicating device as to communication on a call between the communication devices identified by acquired communication device identification information; and
means for returning a received packet to the route setting device after duplicating the received packet by the duplicating device for use in interception.

2. An intercept system for intercepting communication on a call, having a call controller for controlling a call between a plurality of communication devices connected through a packet network and a route setting device for setting a route along which communication on a call between the communication devices is relayed, the intercept system **characterized by** comprising:
an intercept device for intercepting communication;
a route changing device for changing a route in such a way that communication is intercepted by the intercept device; and
a duplicating device for duplicating a packet to be intercepted, wherein
the route changing device comprises:
acquisition means for acquiring communication device identification information for identifying positions on the packet network of the communication devices from the call controller; and
means for setting the route setting device in such a way that a packet received from one communication device is transmitted to the duplicating device and a packet received from the duplicating device is transmitted to another communication device as to communication on a call between the communication devices identified by acquired communication device identification information, and
the duplicating device comprises:
means for duplicating a packet received from the route setting device;
means for returning a received packet to the route setting device; and
means for transmitting a duplicated packet to the intercept device.

3. An intercept system for intercepting communication on a call, having a call controller for controlling a call between a plurality of communication devices connected through a packet network and a plurality of route setting devices for setting a route along which communication on a call between the communication devices is relayed, the intercept system **characterized by** comprising:
an intercept device for intercepting communication;
a route changing device for changing a route in such a way that communication is intercepted by the intercept device; and
a duplicating device for duplicating a packet to be intercepted, wherein
the route changing device comprises:
means for acquiring communication device identification information for identifying positions on the packet network of the communication devices from the call controller;
means for setting a first route setting device in such a way that a packet received from a first communication device is transmitted to the duplicating device as to communication on a call between the communication devices identified by acquired communication device identification information; and
means for setting a second route setting device in such a way that a packet received from the duplicating device is transmitted to a second communication device as to communication on a call between the communication devices identified by acquired communication device identification information, and
the duplicating device comprises:
means for duplicating a packet received from the first route setting device;
means for transmitting a received packet to the second route setting device; and
means for transmitting a duplicated packet to the intercept device.

4. The intercept system according to Claim 2 or 3, **characterized in that**
the intercept device comprises means for transmitting specification information for specifying the communication device to the route changing device, and
the acquisition means provided in the route changing device is constructed to acquire communication device identification information of a communication device specified in the specification information.

5. The intercept system according to any one of Claims 2 to 4, **characterized in that** the route changing device further comprises indentifying means for specifying the route setting device, which changes route setting, from a plurality of devices on the packet network.

6. The intercept system according to Claim 5, **characterized in that** the indentifying means is constructed to specify the route setting device by identifying route setting device identification information for identifying positions of the route setting devices, which is relaying a communication packet as an interception object, on the packet network based on the acquired communication device identification information.

7. The intercept system according to Claim 5, **characterized in that** the identifying means is constructed to identify the route setting device on the packet network which is relaying communication, by inquiring whether communication related to the acquired communication device identification information is being relayed or not on each devices.

8. An intercept system for intercepting communication on a call, having a call controller for controlling a call between a plurality of communication devices connected through a packet network and a route setting device for setting a route along which communication on a call between the communication devices is relayed, the intercept system **characterized by** comprising:
an intercept device for intercepting communication;
a route changing device for changing a route in such a way that communication is intercepted by the intercept device; and
a duplicating device for duplicating a packet to be intercepted, wherein
the call controller comprises means for transmitting notification information for giving a notice of detection to the route changing device when a call of a preset communication device is detected,
the route changing device comprises means for setting the route setting device in such a way that a packet received from one communication device is transmitted to the duplicating device and a packet received from the duplicating device is transmitted to another communication device as to communication on a call between the communication devices, based on received notification information, and
the duplicating device comprises:
means for duplicating a packet received from the route setting device;
means for returning a received packet to the route setting device; and
means for transmitting a duplicated packet to the intercept device.

9. The intercept system according to any one of Claims 2 to 8, **characterized in that** the call controller further comprises:
means for recording an encryption key to be used for communication exchanged between the communication devices; and
means for transmitting a recorded encryption key to the intercept device.

10. A route changing device, capable of communicating with a call controller for controlling a call between a plurality of communication devices connected through a packet network and with a route setting device for setting a route along which communication on a call between the communication devices is relayed, for changing a route set by the route setting device, the route changing device **characterized by** comprising:
means for communicating with a packet duplicating device for duplicating a packet;
means for acquiring communication device identification information for identifying a position on the packet network of the communication device from the call controller;
means for setting the route setting device in such a way that a packet received from one communication device is transmitted to the duplicating device and a packet received from the duplicating device is transmitted to another communication device as to communication on a call between the communication devices identified by acquired communication device identification information; and
means for making the duplicating device duplicate and return a packet received from the route setting device.

11. A computer program for making a computer, capable of communicating with a call controller for controlling a call between a plurality of communication devices connected through a packet network and with a route setting device for setting a route along which communication on a call between the communication devices is relayed, change a route set by the route setting device, the computer program **characterized by** comprising:
a process procedure of acquiring communication device identification information for identifying a position on the packet network of the communication device from the call controller;
a process procedure of transmitting a command for setting the route setting device in such a way that a packet received from one communication device is transmitted to the duplicating device and a packet received from the duplicating device is transmitted to another communication device as to communication on a call between the communication devices identified by acquired communication device identification information; and
a process procedure of transmitting a command for making a duplicating device a packet duplicate and return a packet received from the route setting device for use in duplication.
